# EUROPÄISCHE PATENTSCHRIFT

(11) **EP 4 670 373 B1**
(45) Veröffentlichungstag und Bekanntmachung des Hinweises auf die Patenterteilung: **09.12.2026**
(21) Anmeldenummer: 23708189.8
(22) Anmeldetag: 24.02.2023
(51) Int. Cl.: H04W 4/021, H04W 4/90, H04W 4/029

(54) **VERFAHREN ZUM ÜBERMITTELN VON NOTFALLNACHRICHTEN VON EINEM MOBILEN ENDGERÄT AN EINEN NOTFALLEMPFÄNGER**
METHOD FOR TRANSMITTING EMERGENCY MESSAGES FROM A MOBILE TERMINAL TO AN EMERGENCY RESPONDER
PROCÉDÉ DE TRANSMISSION DE MESSAGES D'URGENCE D'UN TERMINAL MOBILE À UN RÉPONDEUR D'URGENCE

(43) Veröffentlichungstag der Anmeldung: 31.12.2025
(73) Patentinhaber: eBuddies GmbH, 1140 Wien (AT)
(72) Erfinder: FUCHS, Thomas, 1140 Wien (AT); FURTHNER, Thomas, 4040 Lichtenberg (AT); ZEHETBAUER, Gerhard, 1060 Wien (AT)
(74) Vertreter: HGF
(86) Internationale Anmeldenummer: PCT/EP2023/054722
(87) Internationale Veröffentlichungsnummer: WO 2024/175207

(56) Entgegenhaltungen:
- WO-A1-2016/191497
- US-A1- 2019 007 819
- US-B1- 8 036 679

## Beschreibung

### Technischer Hintergrund

Die Erfindung betrifft ein Verfahren zum Übermitteln von Notfallnachrichten von einem mobilen Endgerät an einen Notfallempfänger und ein Verfahren zum Weiterleiten von Notfallnachrichten durch einen Notfallempfänger.

Mobile Endgeräte ermöglichen es ihren Benutzern im Fall eines Notfalls Notfallinformationen an einen Notfallempfänger zu versenden. Bei bestimmten Notfallsituationen kann es vorkommen, dass viele Benutzer mit mobilen Endgeräte von dem Notfall betroffen sind und gleichzeitig Notfallinformationen an einen Notfallempfänger senden wollen. Beim gleichzeitigen Senden von Notfallnachrichten durch viele mobile Endgeräte kann es daher zu einer Überlastung von Kommunikationsnetzen kommen, weshalb die Notfallnachrichten nicht mehr zuverlässig zugestellt werden können.

### Stand der Technik

In der WO 2016/191497 A1 beschreibt ein System sowie ein Verfahren, um in einer Notfallsituation Notfallnachrichten zu versenden und Notfallhilfe bereitzustellen. Das System umfasst eine Anwendung, die ein in dem System registrierter Benutzer auf einem mobilen Endgerät installiert. Durch Aktivieren eines Notfallmodus auf dem mobilen Endgerät werden automatisch Notfallinformationen an einen zentralen Notfallempfänger geschickt, diese Notfallinformationen umfassen mindestens Informationen über die Identität des registrierten Benutzers, beispielsweise durch Senden einer eindeutigen Benutzerkennung, und darüber hinaus Geolokalisierungsinformation des Benutzers des Endgeräts. Die Geolokalisierungsinformationen des registrierten Benutzers werden beispielsweise alle 10 bis 15 Sekunden an den Notfallempfänger gesendet. Um den Batterieverbrauch des mobilen Endgeräts zu optimieren, werden die Geolokalisierungsinformationen nur dann gesendet, wenn sich der Standort des Benutzers wesentlich gegenüber dem zuletzt gesendeten Standort geändert hat. Gemäß einer Ausführungsform werden die gesammelten Alarmdaten, die beispielsweise eine Notfallidentifikationsnummer sowie die gesammelten Geolokalisierungsinformationen umfassen, an einen Notfallmanagementserver weitergeleitet. Der Notfallmanagementserver stellt die Notfalldaten einem Erstversorger über eine Notfallschnittstelle bereit. Die Notfallschnittstelle enthält neben den Daten über den betroffenen Benutzer auch die gesammelten Geolokalisierungssinformation, d.h. den Verlauf des Standorts des Benutzers sowie dazugehörige Kartendaten. Weiter umfasst die Notfallschnittstelle gegebenenfalls zwischen dem Benutzer und einem Operator des Notfallempfängers ausgetauschte Kurznachrichten.

Die US 2015/0137972 A1 beschreibt ein weiteres System sowie Verfahren zum Bereitstellen von Informationen über u. a. den Ort eines Benutzers, um einem Benutzer beim Verlassen einer Notsituation Hilfe zukommen zu lassen. Zum Versenden der Notfallinformationen verwendet der betroffene Benutzer eine Anwendung, in der ein Panikmodus aktiviert werden kann. Im Panikmodus kann ein mobiles Endgerät Standort-, Audio-, Bild- und/oder Videodaten aufnehmen und an einen Server weiterleiten. Der Server stellt die Notfallinformation unter einem Link bereit. Der Benutzer kann nun im Falle eines Notfalls Notfallnachrichten an bekannte oder an eine Notfalleinrichtung senden, beispielsweise als SMS. Mit der Notfallnachricht wird dann eine eindeutige URL versendet, die Zugriff auf alle gesammelten Notfallnachrichten ermöglicht.

Die US 2018/0199179 A1 beschreibt ein weiteres Notfallnachrichtensystem sowie ein Verfahren zum Reagieren auf erhaltene Notfallnachrichten. Das System kann Notfallnachrichten als Textnachrichten, E-Mail, Sprachnachrichten, Sprach-zu-Text-Nachrichten und ähnliches versenden. Ähnlich wie die vorher beschriebenen Systeme empfängt auch hier ein Notfallnachrichtensystem Lokalisierungsinformationen, die regelmäßig aktualisiert werden. Die Aktualisierungsfrequenz ist gemäß dem System von einer Geschwindigkeit abhängig, mit der sich ein Benutzer im Notfall bewegt, d.h., je schneller sich der Benutzer bewegt, desto häufiger werden aktualisierte Lokalisierungsinformationen versendet.

In der US 2013/0196614 A1 wird ein weiteres Notfallmelde- und Überwachungssystem sowie ein zugehöriges Verfahren beschrieben. Das System empfängt Lokalisierungsinformationen regelmäßig und stellt diese auf einer Kartenanwendung dar, die empfangenen Notfallnachrichten werden beispielsweise als SMS versendet, können aber auch per Anruf oder E-Mail übermittelt werden.

Die US 8,036,679 B1 beschreibt ein Verfahren zur Optimierung der Leistung von standortbezogenen Anwendungen durch den Einsatz von Zustandsmaschinen. Das Ziel ist es, den Energieverbrauch und die genutzte Bandbreite zu reduzieren. Sie lehrt die dynamische Anpassung von Softwareparametern, wie dem Intervall für die Standort-Neuberechnung, in Echtzeit. Die Anpassung erfolgt basierend auf Bedingungen wie der Bewegung des Geräts (gemessen an einem Abstandsschwellenwert), dem Erfolg oder Misserfolg von Standortberechnungen oder der Entfernung zu einem Zielort. Insbesondere wird gelehrt, das Neuberechnungsintervall zu erhöhen (die Frequenz zu senken), wenn sich das Gerät nicht bewegt, um Ressourcen zu sparen.

Die US 2019/0007819 A1 offenbart ein Notfall-Unterstützungssystem, bei dem ein Endgerät ein auslösendes Ereignis automatisch erkennt und daraufhin seinen aktuellen geografischen Standort zusammen mit Bildern und/oder Videos seiner Umgebung an eine Notrufzentrale übermittelt. Das System kann zudem weitere Kameras in der Nähe des Endgeräts aktivieren, um zusätzliche Details zu erfassen, und dem Nutzer Anleitungen oder Video-Tutorials (z.B. für Erste-Hilfe-Maßnahmen) auf seinem Gerät anzeigen, um bei der Bewältigung des Notfalls zu helfen.

Aus dem Stand der Technik sind eine Vielzahl von Notfallmeldesystemen für mobile Endgeräte bekannt. Die mobilen Endgeräte senden zum Teil sehr umfangreiche Notfallinformationen an einen Notfallempfänger. Durch die Vielzahl an übermittelten Notfallinformationen kann es in Notfallsituationen mit einer Vielzahl von Betroffenen zu einer Überlastung der Kommunikationsnetze kommen.

### Zusammenfassung der Erfindung

Der vorliegenden Erfindung liegt die Aufgabe zugrunde, ein Verfahren bereitzustellen, das Notfallinformationen möglichst effizient einem Notfallempfänger zur Verfügung stellt.

Eine weitere Aufgabe der Erfindung ist es, ein System bereitzustellen, das bei auftretenden Übertragungsschwierigkeiten die Übermittlung von Notfallinformationen verbessert.

Eine oder mehrere Aufgaben werden durch die Gegenstände der unabhängigen Ansprüche gelöst. Vorteilhafte Weiterbildungen und bevorzugte Ausführungsformen bilden den Gegenstand der Unteransprüche.

Ein Aspekt der Erfindung betrifft ein Verfahren zum Übermitteln von Notfallnachrichten von einem mobilen Endgerät an einen Notfallempfänger. Das mobile Endgerät umfasst einen Sensor zum Bestimmen des Standortes des mobilen Endgeräts und ein Notfallmodul. Das Notfallmodul übermittelt nach dem Aktivieren automatisch Notfallnachrichten an einen Notfallempfänger. Mindestens eine der Notfallnachrichten beinhaltet Notfallstandortinformationen des mobilen Endgeräts. Folgende Operationen werden nach dem Aktivieren des Notfallmoduls in regelmäßigen Abständen ausgeführt: Ermitteln eines aktualisierten Standorts des mobilen Endgeräts durch das mobile Endgerät, Bestimmen eines Abstands zwischen dem aktualisierten Standort und einem Standort entsprechend zuletzt an den Notfallempfänger übermittelten Notfallstandortinformationen, Übermitteln aktualisierter Notfallstandortinformation an den Notfallempfänger mittels einer Notfallnachricht, wobei das Übermitteln der aktualisierten Notfallstandortinformationen nur dann erfolgt, wenn der Abstand größer oder gleich einem vorbestimmten Mindestabstand ist, dadurch gekennzeichnet, dass der vorbestimmte Mindestabstand regelmäßig reduziert wird.

Gemäß der vorliegenden Erfindung ist ein mobiles Endgerät beispielsweise ein Mobiltelefon, ein Laptop, ein Tabletcomputer oder auch ein Wearable oder ein anderes mobiles Endgerät, das entsprechende Sensoren und Kommunikationsmittel enthält.

Ein mobiles Endgerät ist ein tragbares Gerät, welches ein oder mehrere Funkschnittstellen, wie z.B. GSM, GRPS, UMTS, LTE, Bluetooth, WLAN oder NFC, aufweist. Ein mobiles Endgerät ist beispielsweise ein Mobiltelefon, ein Tablet, oder auch ein Wearable wie eine Smartwatch oder ein Datenbrille für augmentierte Realität.

Gemäß der vorliegenden Erfindung ist das Notfallmodul beispielsweise eine auf dem mobilen Endgerät installierte Software, die die Funktionen des Notfallmoduls implementiert. Gemäß einer Alternative kann das Notfallmodul aber auch als Hardwaremodul in dem mobilen Endgerät verbaut sein.

Gemäß der vorliegenden Erfindung ist ein Standort des mobilen Endgeräts gerade der Ort an dem sich das mobile Endgerät zu dem jeweiligen Zeitpunkt befindet.

Gemäß der vorliegenden Erfindung sind Notfallstandortinformationen Informationen, die von dem mobilen Endgerät übermittelt werden, um es einem Notfallempfänger zu ermöglichen, den Standort des mobilen Endgeräts zu bestimmen. Die Notfallstandortinformationen können beispielsweise GPS Koordinaten sein, es kann aber auch jedwede andere Form von Ortsinformationen sein, die es dem Notfallempfänger ermöglichen, den Standort des mobilen Endgeräts zu bestimmen.

Gemäß der vorliegenden Erfindung ist der Notfallempfänger beispielsweise eine Notfallzentrale, wie beispielsweise eine Leitzentrale von Notfalldiensten wie beispielsweise der Feuerwehr, der Polizei, der Rettung oder sonstigen Notfalldiensten. Alternativ kann der Notfallempfänger aber auch jede andere Form von Notfallzentrale sein, beispielsweise ein privater Notfalldienst, ein Notfalldienst beispielsweise eines Frauenhauses oder ähnlicher geschützter Einrichtungen.

Vorzugsweise umfasst das regelmäßige Reduzieren des Mindestabstands insbesondere eines der folgenden: Reduzieren des vorbestimmten Mindestabstands jeweils nach einem vorbestimmten Zeitintervall; Reduzieren des vorbestimmten Mindestabstands wenn das mobile Endgerät binnen des vorbestimmten Mindestabstandsreduzierzeitintervalls keine aktualisierten Notfallstandortinformationen an den Notfallempfänger versendet hat, Reduzieren des Mindestabstands jeweils in Abhängigkeit von einem Abstand eines mobilen Einsatzendgeräts von den zuletzt übermittelten Notfallstandortinformationen, wobei das mobile Einsatzendgerät seinen Standort in regelmäßigen Abständen an das mobile Endgerät sendet; Reduzieren des Mindestabstands, wobei der Mindestabstand immer größer oder gleich einem minimalen Mindestabstand ist und der minimale Mindestabstand bevorzugt in Abhängigkeit von einer Geschwindigkeit des mobilen Endgeräts bestimmt wird.

Gemäß dem oben erwähnten Stand der Technik sind die mobilen Endgeräte zum Übermitteln von Notfallnachrichten so eingerichtet, dass sie einen aktualisierten Standort erst dann übermitteln, wenn sie ihren Standort um eine vorbestimmte Entfernung ändern. Die vorbestimmte Entfernung ist eine festgelegte vorbestimmte Entfernung, die sich mit der Zeit nicht verändert. Den Erfindern der vorliegenden Erfindung ist aufgefallen, dass man weitere Mobilfunknetzwerkressourcen sowie Batterieressourcen des mobilen Endgeräts sparen kann, indem man zunächst bei einer Übermittlung von 1. Notfallstandortinformationen den vorbestimmten Mindestabstand den man verwendet, um zu bestimmen, ob aktualisierte Notfallstandortinformationen übermittelt werden sollen, relativ wählt und dann in regelmäßigen Abständen verkleinert. In einem Einsatzszenario in dem Notfallstandortinformation von dem Notfallempfänger an einen Notfallhelfer weitergeleitet werden ist davon auszugehen, dass der Notfallhelfer zunächst weit von dem mobilen Endgerät entfernt ist, weshalb eine grobe Notfallstandortinformation vollkommen ausreichend ist, um den Notfallhelfer zum mobilen Endgerät zu leiten. Je näher der Notfallhelfer dem Notfallstandort kommt, desto wichtiger ist es, dass der Notfallhelfer aktuelle Standortinformationen des mobilen Endgeräts erhält. Entsprechend schlagen die Erfinder vor, den Mindestabstand regelmäßig zu verkleinern, sodass ein Notfallhelfer, der schließlich in die Nähe des mobilen Endgeräts gelangt, sobald er in der Nähe des mobilen Endgeräts ist, jeden noch so kleinen Standortwechsel des mobilen Endgeräts übermittelt bekommt. D. h. durch das Verwenden eines vorbestimmten Mindestabstands, der regelmäßig reduziert wird, können zusätzlich Netzwerkressourcen und Batterie gespart werden, ohne zu riskieren, dass Notfallhelfer bzw. Notfallempfänger keinen aktuellen Standort eines mobilen Endgeräts erhalten.

Vorzugsweise umfasst der vorbestimmte Mindestabstand einen horizontalen Abstand und/oder einen vertikalen Abstand, wobei der horizontale Abstand vorzugsweise zumindest 2, 3, 4 oder 5 m ist und der vertikale Abstand vorzugsweise mindestens 2, 2,5, 3, 4 oder 5 m beträgt.

Insbesondere kann der horizontale vorbestimmte Mindestabstand in einem Abstand zwischen einem und 500 m variiert werden, besonders vorzugsweise 5 bis 10m, 10 bis 30m, 30 bis 60m, 60 bis 80 m, 80 bis 150 m, 150 bis 230 m, 230 bis 300 m, 300 bis 450 m oder 50 bis 500 m. Wobei jeweils beispielsweise bei schnelleren Bewegungen, beispielsweise schnelles Joggen oder Sprinten ein größerer Mindestabstand gewählt wird und bei einer langsameren Bewegung, beispielsweise leichtes Joggen oder normales Gehen, ein kleinerer Mindestabstand gewählt wird.

Insbesondere kann der vertikale vorbestimmte Mindestabstand ein Abstand zwischen 2 und 40 m sein, insbesondere 2 m, 2,5 m, 3m, 4m, 5 bis 10 m, 10 bis 20 m, oder 20 bis 40 m sein.

Beispielsweise können der vertikale vorbestimmte Mindestabstand abhängig von einem Ort automatisch eingestellt sein, beispielsweise in einem Neubauhaus entspricht der horizontale Mindestabstand gerade eine Geschosshöhe, diese variiert aber beispielsweise gegenüber einer Geschosshöhe in einem Altbau, wo die Geschosshöhe Größe ist, wiederum größere Geschosshöhen hat man beispielsweise in Bahnhöfen insbesondere für Untergrundbahnen.

Dadurch, dass der Mindestabstand einen vertikalen und oder einen horizontalen Abstand umfasst, kann beispielsweise berücksichtigt werden, dass bei Situationen, in denen sich das mobile Endgerät in einem Gebäude befindet, beispielsweise ein Verändern der Position um ein Stockwerk in jedem Fall mitgeteilt wird. Gerade bei Notfallsituationen kann es wichtig sein, in welchem Stockwerk sich ein Notfallsuchender befindet, daher ist gemäß der vorliegenden Erfindung der vertikale Abstand gerade entsprechend einer typischen Stockwerk Höhe zu wählen.

Vorzugsweise umfasst das Verfahren außerdem ein Erhöhen des vorbestimmten Mindestabstands, wenn das mobile Endgerät binnen des vorbestimmten Mindestabstandsreduzierzeitintervalls die aktualisierten Notfallstandortinformationen an den Notfallempfänger versendet hat.

Wenn das mobile Endgerät binnen des Mindestabstandsreduzierzeitintervalls Notfallstandortinformationen an den Notfallempfänger versendet, so ist dies gleichbedeutend damit, dass der bestimmte Abstand zwischen dem aktualisierten Standort und einem Standort entsprechend zuletzt an den Notfallempfänger übermittelten Notfallinformationen größer als der vorbestimmte Mindestabstand ist, dann nur wenn der Abstand größer als der vorbestimmte Mindestabstand ist, können aktualisierte Notfallinformationen verwendet werden. Daher legt das mobile Endgerät binnen des Mindestabstandsreduzierzeitintervalls eine Strecke mindestens so groß wie der Abstand zurück, durch das Vergrößern des vorbestimmten Mindestabstands erreicht man somit, dass der Notfallempfänger nicht mit Notfallnachrichten des mobilen Endgeräts überflutet wird, wodurch ein Publikationskanal zwischen dem mobilen Endgerät und dem Notfallempfänger verstopft werden könnte.

Vorzugsweise erfolgt das Ermitteln eines Standorts mittels mindestens einem der folgenden Einrichtungen oder Methoden: mittels eines globalen Navigationssatellitensystems, mittels Triangulation anhand von Signalen umliegender Basisstationen eines Mobilfunksystems, anhand von Signalen einer Station eines drahtlosen Netzwerkes, anhand von Standortdaten in Kalendereinträgen in einer Kalenderanwendung des mobilen Endgeräts, basierend auf einem zuletzt bestimmten Standort mittels Messwerten eines Beschleunigungssensors des mobilen Endgeräts und einem Kompass des mobilen Endgeräts, oder anhand von Messwerten eines barometrischen Höhenmessers.

Insbesondere kann der Beschleunigungssensor auch einen Schrittzähler umfassen.

Dadurch, dass ein globales Navigationssatellitensystems zum Feststellen des Standort verwendet wird, kann ein Standort besonders genau bestimmt werden, weshalb Einsatzkräfte am Notfallort das mobile Endgerät besonders zuverlässig auffinden können. Kann ein Standort des mobilen Endgeräts nicht mittels eines globalen Navigationssatellitensystems bestimmt werden, kann ein Standort beispielsweise auch anhand einer Triangulation anhand von Signalen umliegender Basisstationen eines Mobilfunksystems, oder anhand von Signalen von Stationen drahtloser Netzwerke bestimmt werden. Dadurch, dass das mobile Endgerät auch ohne die Verfügbarkeit eines globalen Navigationssatellitensystems den Standort des mobilen Endgeräts bestimmen kann, kann sichergestellt werden, dass zum Beispiel auch innerhalb von Häusern oder in unwegsamem Gebiet ein Standort zuverlässig bestimmt werden kann.

Dadurch, dass der Standort des mobilen Endgeräts gemäß einer Alternative basierend auf Messwerten eines Beschleunigungssensors des mobilen Endgeräts und einem Kompass des mobilen Endgeräts bestimmt wird, kann auch in unwegsamem Gebiet ohne beispielsweise Satellitenempfang vom globalen Navigationssatellitensystem immer noch mit einer gewissen Genauigkeit ein Standort bzw. eine Standortänderung bestimmt werden.

Dadurch, dass ein barometrischer Höhenmesser zum Bestimmen eines Standorts mit verwendet wird, kann beispielsweise in Gebäuden eine Änderung des Standorts, beispielsweise ein Betreten eines neuen/anderen Stockwerks eines Gebäudes, zuverlässig bestimmt werden.

Vorzugsweise umfasst das Ermitteln des aktuellen Standorts ein Bestimmen einer Höhe des mobilen Endgeräts, beispielsweise mittels eines barometrischen Höhenmessers, wobei der barometrische Höhenmesser vorzugsweise mit dem Aktivieren des Notfallmoduls aktiviert wird.

Ein barometrischer Höhenmesser bestimmt die Höhe über dem Boden oder über Normalnull anhand des Luftdrucks. Viele mobile Endgeräte sind mit einem solchen barometrischen Höhenmesser ausgestattet. Barometrische Höhenmesser erlauben typischerweise mit einer Genauigkeit kleiner als 1 m eine Bestimmung einer Höhe bzw. die Änderung einer Höhe.

Typischerweise werden barometrische Höhenmesser beispielsweise bei sportlichen Aktivitäten in mobilen Endgeräten verwendet, um beispielsweise ein Höhenprofil aufzuzeichnen. Daher werden die barometrischen Höhenmesser typischerweise von Anwendungen auf dem mobilen Endgerät gestartet, die zum Aufzeichnen des Höhenprofils ausgebildet sind. Dadurch, dass automatisch mit dem Aktivieren des Notfallmodus der barometrische Höhenmesser aktiviert wird, wird sichergestellt, dass beispielsweise auch bei Notfällen in Gebäuden eine Änderung des Standorts beispielsweise durch Betreten eines neuen/anderen Stockwerks mittels des barometrischen Höhenmessers festgestellt werden kann.

Vorzugsweise umfasst das Aktivieren des Notfallmoduls ein Starten einer Aufnahme, beispielsweise eine Tonaufnahme und/oder eine Videoaufnahme mit dem mobilen Endgerät, sowie optional Senden der Aufnahme an den Notfallempfänger.

Dadurch, dass automatisch Ton und/oder Videoaufnahmen durch das mobile Endgerät aufgenommen werden und diese an den Notfallempfänger verschickt werden, können Notfallempfänger die empfangenen Aufnahmen analysieren und anhand der ermittelten Analyseergebnisse feststellen beispielsweise um welche Art von Notfall es sich handelt. Dadurch, dass die Analyse durch den Notfallempfänger ausgeführt wird, kann auf dem mobilen Endgerät darüber hinaus Energie gespart werden, da das mobile Endgerät für eine Analyse nicht ausreichend Rechenkapazitäten oder Akkukapazitäten hat.

Vorzugsweise umfasst das Aktivieren des Notfallmodus ein Senden einer ein Bewegungsprofil des mobilen Endgeräts umfassenden Notfallnachricht. Das Bewegungsprofil umfasst eine Mehrzahl von Bewegungsinformationspaaren aus Endgerätestandortinformationen des mobilen Endgeräts und korrespondierende Zeitinformationen von einem vorbestimmten Zeitraum vor dem Aktivieren des Notfallmodus. Vorzugsweise umfasst das Bewegungsprofil Einträge einer Kalenderanwendung auf dem mobilen Endgerät. Vorzugsweise werden die Einträge des Bewegungsprofils mit den Einträgen der Kalenderanwendung abgeglichen.

Dadurch, dass das Bewegungsprofil des mobilen Endgeräts an den Notfallempfänger versendet wird, kann der Notfallempfänger beispielsweise wiederkehrende Muster, wie beispielsweise regelmäßig besuchte Orte, erkennen und, falls das mobile Endgerät keine aktuellen Standortinformationen verschickt, anhand der wiederkehrenden Muster einen möglichen Notfallstandort bestimmen. Liegen Standortinformationen des mobilen Endgeräts vor, so kann beispielsweise anhand des Bewegungsprofils gegebenenfalls ein Standort noch genauer bestimmt werden, beispielsweise liegen lediglich ungenaue Standortinformation vor, im Bewegungsprofil sind aber unter den regelmäßig besuchten Orten Orte in der Nähe, können diese als mögliche Standorte verwendet werden.

Vorzugsweise umfasst das Verfahren ein Vorhalten des Bewegungsprofils mit einer Mehrzahl an Bewegungsinformationspaaren mindestens über den vorbestimmten Zeitraum, wobei eine zeitliche Granularität der im Bewegungsprofil hinterlegten Bewegungsinformationspaare für weiter zurückliegende Zeitpunkte abnimmt.

Anhand der Bewegungsinformationspaare im Bewegungsprofil kann beim Ausbleiben eines Übersendens aktualisierter Standortinformationen beispielsweise anhand der Informationen im Bewegungsprofil ein aktueller Standort bestimmt werden. Dadurch, dass die zeitliche Granularität der Bewegungsinformationspaare im Bewegungsprofil für weiter zurückliegende Zeitpunkte abnimmt, wird Speicher gespart, wobei die Daten möglichst so vorgehalten werden, dass bestimmte Muster trotzdem aus dem Bewegungsprofil abgelesen werden können.

Vorzugsweise werden Muster im Bewegungsprofil vom mobilen Endgerät ausgewertet und vorgehalten, beispielsweise wenn das mobile Endgerät gerade geladen wird. Dadurch können die rechenintensiven Auswertungen zum Bestimmen der Muster auf dem mobilen Endgerät ausgeführt werden, während aufgeladen wird, ohne unnötig Batteriekapazitäten zu verbrauchen.

Vorzugsweise wird zusätzlich zu dem vorbestimmten Mindestabstand ein zeitlicher Mindestabstand verwendet, wobei beim Erzeugen einer weiteren Notfallnachricht ein zeitlicher Mindestabstand zwischen einem Zeitpunkt zu dem die zuletzt übermittelte Notfallnachricht verschickt wurde und der aktuellen Uhrzeit bestimmt wird und die weitere Notfallnachricht nur dann an den Notfallempfänger übermittelt wird, wenn der zeitliche Mindestabstand größer oder gleich dem zeitlichen Mindestabstand ist, wobei der zeitliche Mindestabstand vorzugsweise mindestens 1 Sekunde, 2 Sekunden, 3 Sekunden, 5 Sekunden, 10 Sekunden, 20 Sekunden, 30 Sekunden, 1 Minute oder 2 Minuten beträgt.

Wenn sich das mobile Endgerät sehr schnell bewegt, so müsste das mobile Endgerät ständig weitere Notfallnachrichten mit aktualisierten Standortinformationen versenden, da es sich binnen kürzester Zeit um den vorbestimmten Mindestabstand bewegt. Dadurch, dass ein weiterer zeitlicher Mindestabstand zwischen zwei Aktualisierungen überprüft wird, kann somit für sich schnell bewegende mobile Endgeräte verhindert werden, dass diese unentwegt aktualisierte Standortinformationen an einen Notfallempfänger versenden.

Vorzugsweise wird der minimale Mindestabstand basierend auf einer Geschwindigkeit mit der sich das mobile Endgerät bewegt bestimmt, wobei der minimale Mindestabstand so gewählt wird, dass bei entsprechender Geschwindigkeit frühestens nach dem zeitlichen Mindestabstand eine Strecke entsprechend dem minimalen Mindestabstand zurückgelegt wird, insbesondere eine Strecke entsprechend dem Doppelten des minimalen Mindestabstands.

Dadurch, dass der minimale Mindestabstand abhängig von einer Geschwindigkeit des mobilen Endgeräts gewählt wird, kann wiederum ein zu häufiges Versenden von Notfallnachrichten verhindert werden.

Vorzugsweise umfasst das Verfahren außerdem ein Erfassen einer wesentlichen Bewegungsrichtung, insbesondere einer wesentlichen Bewegungsgeschwindigkeit, des mobilen Endgeräts, und Senden einer Notfallnachricht umfassend die wesentliche Bewegungsrichtung, insbesondere die wesentliche Bewegungsgeschwindigkeit, an den Notfallempfänger, insbesondere umfassend Senden einer weiteren Notfallnachricht umfassend einen aktualisierten Notfallstandort und die wesentliche Bewegungsrichtung, insbesondere die wesentliche Bewegungsgeschwindigkeit, wenn das mobile Endgerät eine Richtungsänderung der wesentlichen Bewegungsrichtung des mobilen Endgeräts von mehr als 45 Grad erfasst.

Die wesentliche Bewegungsrichtung im Sinne der vorliegenden Erfindung ist eine Bewegungsrichtung des mobilen Endgeräts gemittelt über eine gewisse Zeitspanne. Die Zeitspanne kann beispielsweise 5 Sekunden, 10 Sekunden, 20 Sekunden, 30 Sekunden, 1 Minute oder 2 Minuten sein. Die wesentliche Bewegungsrichtung kann entweder eine 3-dimensionale Bewegungsrichtung sein, ebenso eine Bewegungsrichtung in einer Ebene sein.

Die wesentliche Bewegungsgeschwindigkeit im Sinne der vorliegenden Erfindung ist eine Bewegungsgeschwindigkeit des mobilen Endgeräts gemittelt über eine gewisse Zeitspanne. Die Zeitspanne kann beispielsweise 5 Sekunden, 10 Sekunden, 20 Sekunden, 30 Sekunden, 1 Minute oder 2 Minuten sein. Die wesentliche Bewegungsgeschwindigkeit kann eine Geschwindigkeit im dreidimensionalen Raum sein, ebenso kann die wesentliche Bewegungsgeschwindigkeit ein Geschwindigkeitsbetrag sein, der zusammen mit der wesentlichen Bewegungsrichtung die Geschwindigkeit im dreidimensionalen Raum gibt.

Dadurch, dass das mobile Endgerät eine wesentliche Bewegungsrichtung erfasst und an den Notfallempfänger meldet, kann eine ungefähre Position des mobilen Endgeräts bestimmt werden. Dadurch, dass eine Änderung der wesentlichen Bewegungsrichtung um mehr als 45° zusammen mit aktualisierten Notfallstandortinformation an den Notfallempfänger übermittelt werden, kann die Genauigkeit mit der eine ungefähre Position des mobilen Endgeräts bestimmt wird, verbessert werden. Bewegt sich beispielsweise das mobile Endgerät entlang von Stra-ßenzügen, so kann durch das Senden der aktualisierten Notfallstandortinformationen zusammen mit der geänderten Bewegungsrichtung ein Abbiegen in eine andere Straße rechtzeitig erkannt und mitgeteilt werden, sodass ein Benutzer des mobilen Einsatzendgeräts auf der Suche nach dem mobilen Endgerät ebenfalls entsprechend abbiegen kann.

Vorzugsweise umfasst das Verfahren noch ein automatisches Aktivieren des Notfallmodus, wenn der Beschleunigungssensor eine Beschleunigung oberhalb eines Gefahrengrenzwerts erfasst.

Dadurch, dass der Notfallmodus bei besonders hohen erfassten Beschleunigungen automatisch ausgelöst wird, können beispielsweise bestimmte Unfallsituationen automatisch erkannt werden, woraufhin dann automatisch entsprechende Notfallnachrichten versendet werden können.

Vorzugsweise werden die Notfallnachrichten als Textnachrichten, insbesondere nach dem SMS-, MMS- oder RCS-Standard übermittelt.

Durch das Verwenden von Standard-Textnachrichten sollte die Übermittlung der Notfallnachrichten besonders zuverlässig funktionieren.

Vorzugsweise umfassen die Notfallnachrichten neben der Standortinformation weitere Notfallinformationen. Die weiteren Notfallinformationen sind beispielsweise eines oder mehrere der folgenden: Identifikationsinformationen, die das mobile Endgerät eindeutig identifizieren, eine Anzahl der vom Notfall betroffenen Personen, Namen der vom Notfall betroffenen Personen, eine Art des Notfalls, eine Beschreibung über die Art der Verletzungen, mögliche Anzahl von Tätern, mögliche Bewaffnung der Täter und Gesundheitsinformationen der betroffenen Personen.

Dadurch, dass weitere Notfallinformationen mit der Notfallnachricht versendet werden, kann ein Notfallempfänger entsprechend der erhaltenen Notfallinformationen gezielt die richtige Hilfe alarmieren.

Vorzugsweise umfasst das Verfahren außerdem ein Sammeln von Netzwerk-Informationen über eine Netzwerkumgebung des mobilen Endgeräts, und Senden der Netzwerk-Informationen in einer Notfallnachricht, wobei das mobile Endgerät beim Sammeln der Netzwerk-Informationen insbesondere Netzwerk-Informationen über drahtlose Netzwerke sammelt, insbesondere WiFi-Netzwerke, Bluetooth-Netzwerke, WiMAX-Netzwerke und Mobilfunk-Netzwerke.

Vorzugsweise umfassen die Netzwerk-Informationen beispielsweise gefundene Bluetooth-Geräte, WiFi-Hotspots oder andere Zugangspunkte zu anderen drahtlosen Netzwerken wie WiMAX oder einem Mobilfunk-Netzwerk.

Dadurch, dass das mobile Endgerät noch in der Netzwerkumgebung Netzwerk-Informationen sammelt, kann beispielsweise ein Ort bestimmt werden, beispielsweise durch Triangulation anhand von empfangenen Signalen von Mobilfunkmasten oder anhand von Namen von WiFi-Netzwerken. Werden beispielsweise Bluetooth-Geräte in der Netzwerkumgebung gefunden, so kann beispielsweise eine Kennung eines möglichen Täters in den Netzwerkinformationen enthalten sein, anhand derer man einen Täter finden oder identifizieren kann.

Ein weiterer Aspekt der Erfindung umfasst ein Verfahren zum Weiterleiten von Notfallnachrichten durch einen Notfallempfänger, das Verfahren umfasst: regelmäßiges Empfangen von Notfallstandortinformationen eines mobilen Endgeräts von dem mobilen Endgerät und automatisches Weiterleiten der empfangenen Notfallstandortinformationen an ein mobiles Einsatzendgerät.

Dadurch, dass der Notfallempfänger die Standortaktualisierungsnachrichten ausliest und die darin enthaltenen Notfallstandortinformationen automatisch an das Einsatzendgerät weiterleitet sind auf dem Einsatzendgerät immer alle aktuellen Notfallstandortinformationen vorhanden.

Vorzugsweise umfassen die Notfallnachrichten neben den Standortinformationen weitere Notfallinformationen, diese weiteren Notfallinformationen umfassen mindestens eines der folgenden: Identifikationsinformationen, die das mobile Endgerät eindeutig identifizieren, eine Anzahl der vom Notfall betroffenen Personen, Namen der vom Notfall betroffenen Personen, eine Art des Notfalls und Gesundheitsinformation der betroffenen Personen.

Dadurch, dass weitere Notfallinformationen mit der Notfallnachricht versendet werden, kann ein Notfallempfänger entsprechend der erhaltenen Notfallinformationen gezielt die richtige Hilfe alarmieren.

Vorzugsweise umfasst das automatische Weiterleiten der empfangenen Notfallstandortinformationen ein Ermitteln von Kartendaten anhand der empfangenen Notfallstandortinformationen und ein Bereitstellen der Kartendaten für das mobile Einsatzendgerät.

Dadurch, dass das mobile Einsatzendgerät automatisch mit Kartendaten basierend auf den empfangenen Notfallstandortinformationen versorgt wird, kann ein Benutzer des mobilen Einsatzendgeräts sich am Notfallstandort zuverlässig zurechtfinden und diesen zuverlässig erreichen.

Vorzugsweise werden die empfangenen Notfallstandortinformation durch den Notfallempfänger gespeichert und die Kartendaten umfassen alle empfangenen Notfallstandortinformationen, wobei insbesondere eine Reihenfolge mit der die Notfallstandortinformationen empfangen wurden, in den Kartendaten hervorgehoben werden.

Dadurch, dass die Reihenfolge mit der die Notfallstandortinformationen empfangen wurden, in den Kartendaten hervorgehoben werden, kann ein Benutzer des mobilen Einsatzendgeräts schnell erkennen, welches die aktuellen Notfallstandortinformationen sind und wie das mobile Endgerät zu dem jeweiligen Notfallstandort gelangt ist. In Notfallsituationen kann es beispielsweise sein, dass ein Zugang zu einem bestimmten Ort versperrt ist, weshalb nicht klar ist, wie man zu einem Standort gelangt. Anhand des Verlaufs und anhand der eingezeichneten Reihenfolge der Notfallstandortinformationen kann im Notfall ein Notfallhelfer, der das mobile Einsatzendgerät verwendet, anhand des Verlaufs erkennen wie er zum Notfallstandort bzw. zum aktualisierten Standort des mobilen Endgeräts gelangt.

Vorzugsweise umfasst das Verfahren außerdem ein Empfangen einer Notfallnachricht umfassend eine wesentliche Bewegungsrichtung des mobilen Endgeräts, insbesondere eine wesentliche Bewegungsgeschwindigkeit, ein Bestimmen eines wahrscheinlichen Standorts des mobilen Endgeräts basierend auf der wesentlichen Bewegungsrichtung, insbesondere basierend auf der wesentlichen Bewegungsgeschwindigkeit, und Senden des wahrscheinlichen Standorts an das mobile Einsatzendgerät, sodass das mobile Einsatzendgerät den wahrscheinlichen Standort in den Kartendaten hervorheben kann.

Dadurch, dass das mobile Einsatzendgerät den wahrscheinlichen Standort des mobilen Endgeräts durch den Notfallempfänger mitgeteilt bekommt, kann ein Benutzer des mobilen Einsatzendgeräts den hilfesuchenden Benutzer des mobilen Endgeräts leichter auffinden.

Vorzugsweise umfasst das Verfahren außerdem ein Empfangen einer Aufnahme, wobei die Aufnahme beispielsweise eine Audioaufnahme oder eine Videoaufnahme ist; ein Analysieren der Aufnahme auf vorbestimmte Muster, und wenn die vorbestimmten Muster in der Aufnahme gefunden werden, Senden von Informationen über das gefundene vorbestimmte Muster an das Einsatzendgerät, vorzugsweise umfassend ein Senden der Aufnahme an das Einsatzendgerät.

Dadurch, dass empfangene Aufnahmen beim Notfallempfänger auf vorbestimmte Muster untersucht werden, kann der Notfallempfänger gegebenenfalls anhand der vorbestimmten Muster weitere Notfallinformationen beispielsweise über eine Notfallart, über eine Gefahrenlage oder über eine Lage vor Ort aus den empfangenen Aufnahmen extrahieren und entsprechend extrahierte Informationen an das Einsatzendgerät weiterleiten. Eine solche Analyse ist gegebenenfalls rechenintensiv und kann nicht auf einem mobilen Endgerät ausgeführt werden, der Notfallempfänger hingegen sollte ausreichend Rechenkapazitäten zur Verfügung haben.

Vorzugsweise umfasst das Verfahren ein Empfangen von zweiten Notfallstandortinformationen von einem zweiten mobilen Endgerät. Außerdem umfasst das Verfahren ein Berechnen eines Abstands zwischen zuletzt vom mobilen Endgerät empfangenen Notfallstandortinformationen und den zweiten Notfallstandortinformationen. Ist der Abstand kleiner als ein vorbestimmter Notfallradius, so werden die zweiten Notfallstandortinformationen ebenfalls an das Einsatzendgerät weitergeleitet.

Dadurch, dass ein Notfallhelfer, der das Einsatzendgerät verwendet, neben den Standortinformationen des ersten mobilen Endgeräts auch Standortinformationen des zweiten mobilen Endgeräts erhält, ist der Notfallhelfer in der Lage auch weitere Hilfsbedürftige in der Nähe direkt zu erkennen und aufzusuchen.

Vorzugsweise umfasst das Verfahren außerdem ein Ermitteln von Kartendaten anhand der zweiten Notfallstandortinformationen und der Notfallstandortinformationen nur wenn der Abstand kleiner als der Notfallradius ist; und ein automatisches Bereitstellen der Kartendaten für das mobile Einsatzendgerät.

Befinden sich das mobile Endgerät und das zweite mobile Endgerät innerhalb eines vorbestimmten Abstands, so gehören sie mit großer Wahrscheinlichkeit zu demselben Notfall. Dadurch, dass die zweiten Notfallstandortinformationen dem mobilen Einsatzendgerät automatisch zur Verfügung gestellt werden, kann ein Notfallhelfer, der das mobile Einsatzendgerät verwendet, besonders schnell auch den Benutzer des zweiten mobilen Endgeräts finden und aus der Notsituation befreien. Dadurch, dass die zweiten Notfallstandortinformationen nur dann an das mobile Einsatzendgerät weitergeleitet werden, wenn die zwei mobilen Endgeräte sich innerhalb des vorbestimmten Abstands voneinander befinden, kann ein mobiles Netzwerk entlastet werden, da unnötige Informationen nicht an das mobile Einsatzendgerät gesendet werden.

Vorzugsweise umfasst das Verfahren außerdem ein Abfragen von Standortinformationen von einem Standortinformationsanbieter basierend auf den Notfallstandortinformationen, wobei die Standortinformationen mindestens eines der folgenden umfassen: Informationen über eine typische Belebtheit des Notfallstandorts, Informationen über eine aktuelle Belebtheit des Notfallstandorts, Informationen über einen Verlauf der Belebtheit des Notfallstandorts, Informationen über Veranstaltungen am Notfallstandort und Informationen über frühere Notfälle an dem Notfallstandort.

Vorzugsweise umfasst das Verfahren Alarmieren zusätzlicher Notfallhelfer basierend auf den abgefragten Standortinformationen.

Dadurch, dass der Notfallempfänger automatisch Standortinformationen basierend auf den Notfallstandortinformationen abfragt, können basierend auf den Standortinformationen weitere Maßnahmen ergriffen werden. Beispielsweise Alarmieren weiterer Notfallhelfer, Alarmieren einer anderen Notfallzentrale und ähnliches. Es ist beispielsweise denkbar, dass die Standortinformationen anzeigen, dass der Notfallstandort derzeit typischerweise sehr belebt ist, weshalb davon auszugehen ist, dass bei bestimmten Notfallsituationen, beispielsweise einem Feuer oder ähnlichem, viele Personen von dem Notfall betroffen sind, weshalb automatisch beispielsweise mehrere Krankenwagen, Feuerwehren, Polizeistationen alarmiert werden können, um so in ausreichendem Maße Hilfe zur Verfügung zu stellen.

Vorzugsweise umfasst das Verfahren außerdem Empfangen einer Notfallnachricht mit Netzwerk-Informationen von dem mobilen Endgerät, und Weiterleiten der Netzwerk-Informationen an das mobile Einsatzendgerät.

Dadurch, dass der Notfallempfänger die Netzwerk-Informationen an das mobile Einsatzendgerät weiterleitet, kann das mobile Einsatzendgerät am Einsatzort anhand der Netzwerkinformationen beispielsweise einen Standort des mobilen Endgeräts anhand von in den Netzwerkinformationen enthaltenen Daten ermittelt werden. Die Netzwerkinformationen können beispielsweise auch Informationen über Bluetooth-Geräte, oder andere Geräte mit entsprechender Netzwerkkennung in einem drahtlosen Netzwerk in der Umgebung des mobilen Endgeräts sein, dann kann das mobile Einsatzendgerät basierend auf diesen Netzwerkkennungen Geräte erkennen, die zu dem jeweiligen Zeitpunkt in der Nähe des mobilen Endgeräts waren. Diese anhand von Netzwerkkennungen erkannten Geräte können auch zum Identifizieren von Beteiligte, Zeugen oder Tätern verwendet werden.

Weitere Aspekte der Erfindung betreffen ein Computerprogrammprodukt und ein computerlesbares Speichermedium, wobei das Computerprogrammprodukt sowie das computerlesbares Speichermedium Befehle umfasst, die bei der Ausführung durch einen Computer diesen dazu veranlassen, die oben beschriebenen Verfahren auszuführen.

Einen weiteren Aspekt der Erfindung betrifft ein System zur Datenverarbeitung, wobei das System Mittel zur Ausführung der oben beschriebenen Verfahren umfasst.

Das Computerprogrammprodukt, das Speichermedium sowie das System zur Datenverarbeitung bewirken die oben mit Bezug zu den jeweiligen Verfahren beschriebenen technischen Effekte.

### Kurze Zusammenfassung der Figuren

Die Erfindung wird nachfolgend anhand der in den Zeichnungen dargestellten Beispiele näher erläutert. Die Zeichnungen zeigen in:
- **Figur 1**: schematisch ein mobiles Endgerät gemäß einer Ausführungsform;
- **Figur 2**: schematisch ein Notfallempfangsgerät gemäß einer Ausführungsform;
- **Figur 3**: schematisch ein mobiles Einsatzendgerät gemäß einer Ausführungsform;
- **Figur 4**: schematisch ein System umfassend das mobile Endgerät, das Notfallempfangsgerät und das mobile Einsatzendgerät;
- **Figur 5**: schematisch ein Verfahren gemäß einer Ausführungsform;
- **Figur 6**: schematisch ein Verfahren gemäß einer Ausführungsform;
- **Figur 7**: schematisch ein Verfahren gemäß einer Ausführungsform;
- **Figur 8**: schematisch ein Verfahren gemäß einer Ausführungsform;
- **Figur 9**: schematisch ein Verfahren gemäß einer Ausführungsform;
- **Figur 10**: schematisch ein Verfahren gemäß einer Ausführungsform;
- **Figur 11**: schematisch ein Verfahren gemäß einer Ausführungsform.

### Detaillierte Beschreibung der Ausführungsformen

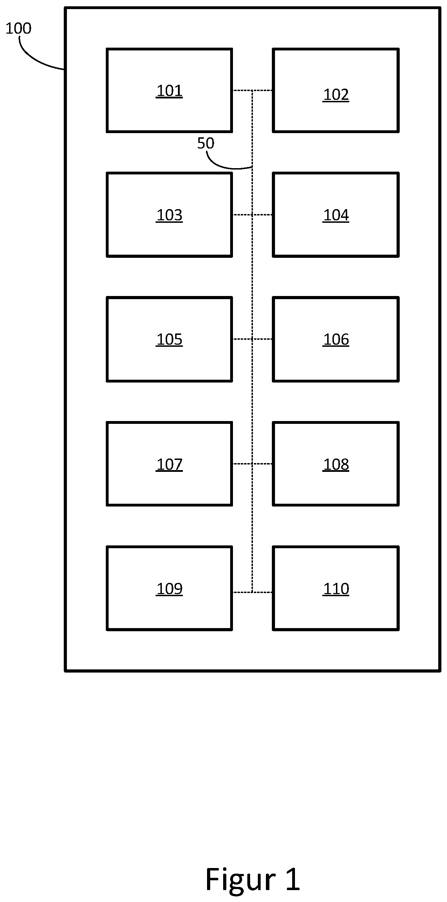

Der grundsätzliche schematische Aufbau eines mobilen Endgeräts 1 zum Übermitteln von Notfallnachrichten gemäß einer ersten Ausführungsform ist in Figur 1 gezeigt.

Das mobile Endgerät ist beispielsweise ein Mobiltelefon, ein Laptop, ein Tabletcomputer oder auch ein Wearable oder ein anderes mobiles Endgerät, das entsprechende Module wie beispielsweise Sensoren und Kommunikationsmittel enthält.

Das mobile Endgerät 100 umfasst ein Notfallmodul 101, ein Kommunikationsmodul 102, ein Standortmodul 103, ein Höhenmessermodul 104, ein Kompassmodul 105, ein Kalendermodul 106, ein Speichermodul 107, ein Profilmodul 108, ein Beschleunigungssensormodul 109 und ein Displaymodul 110.

Die verschiedenen Module können über Kanäle 50 Daten miteinander austauschen. Die Kanäle 50 sind logische Datenverbindungen zwischen den einzelnen Modulen. Die Module können sowohl als Software- als auch als Hardware-Module ausgebildet sein.

Das Notfallmodul 101 ist dazu eingerichtet, das Übermitteln der Notfallnachrichten zu steuern, dazu kommuniziert es mit den weiteren Modulen des mobilen Endgeräts 1 und sammelt die jeweils in den Notfallnachrichten enthaltenen Notfallinformationen von den verschiedenen Modulen des mobilen Endgeräts 1 und schickt sie in Notfallnachrichten mittels des Kommunikationsmoduls 2 an den Notfallempfänger.

Das Kommunikationsmodul 102 ist dazu eingerichtet, das mobile Endgerät 100 mit einem Kommunikationsnetzwerk zu verbinden. Das Kommunikationsnetzwerk kann hierbei ein beliebiges drahtloses Netzwerk oder auch ein kabelgebundenes Netzwerk sein. Das drahtlose Netzwerk kann beispielsweise ein Wifi-Netzwerk, oder auch ein GSM-Netzwerk, beispielsweise 3G, 4G, 5G o. ä. sein, beispielsweise auch eine Bluetooth Verbindung. Das Kommunikationsmodul 102 sendet und empfängt Daten über das Kommunikationsnetzwerk.

Das Standortmodul 103 ist dazu ausgebildet, den Standort des mobilen Endgeräts 100 zu bestimmen. Dazu kann es beispielsweise ein globales Navigationssatellitensystem verwenden.

Das Höhenmessermodul 104 ist dazu eingerichtet, eine Höhe des mobilen Endgeräts 100 zu bestimmen. Das Höhenmessermodul 104 kann beispielsweise einen barometrischen Höhensensor umfassen, d. h. das Höhenmessermodul 104 bestimmt einen barometrischen Druck und basierend auf dem bestimmten barometrischen Druck wird eine Höhe des mobilen Endgeräts 100 ausgegeben.

Das Kompassmodul 105 ist dazu eingerichtet, eine Ausrichtung bzw. eine Lage des mobilen Endgeräts 100 zu bestimmen und beispielsweise an das Standortmodul 103 auszugeben.

Das Kalendermodul 106 ist dazu eingerichtet, Einträge in einer Kalenderanwendung auf dem mobilen Endgerät 100 auszulesen.

Das Speichermodul 107 ist dazu eingerichtet, Daten auf dem mobilen Endgerät 100 zu speichern bzw. die gespeicherten Daten an andere Module des mobilen Endgeräts 100 auszugeben.

Das Profilmodul 108 ist dazu eingerichtet, ein Bewegungsprofil des mobilen Endgeräts zu erstellen und im Speichermodul 107 zu hinterlegen. Das Profilmodul 108 kann beispielsweise mit dem Notfallmodul 101 zusammenarbeiten.

Das Displaymodul 110 umfasst einen Bildschirm, beispielsweise einen Touchscreen-Bildschirm, auf dem das mobile Endgerät 100 Informationen darstellt, beispielsweise von ausgeführten Anwendungen. Darüber hinaus kann der Bildschirm zum Steuern der Funktionen des mobilen Endgeräts 100 verwendet werden.

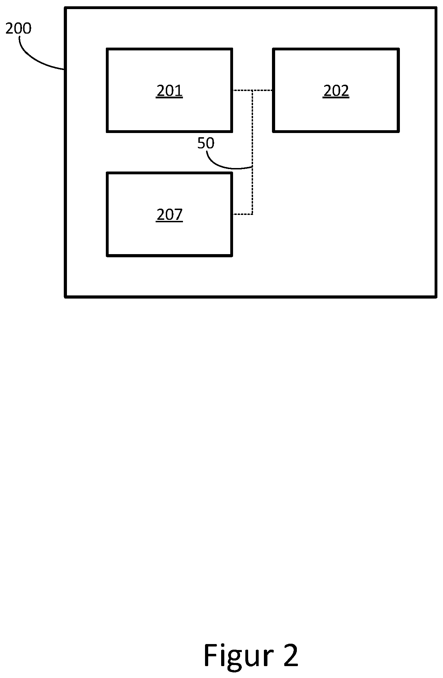

Der grundsätzliche schematische Aufbau eines Notfallempfängers 200 zum Weiterleiten von Notfallnachrichten gemäß der ersten Ausführungsform ist in Figur 2 gezeigt. Der Notfallempfänger umfasst ein Datenaggregationsmodul 201, ein Kommunikationsmodul 202 und ein Speichermodul 207.

Die verschiedenen Module des Notfallempfängers 200 können über Kanäle 50 Daten miteinander austauschen. Die Kanäle 50 sind logische Datenverbindungen zwischen den einzelnen Modulen. Die Module können sowohl als Software- als auch als Hardwaremodule ausgebildet sein.

Das Kommunikationsmodul 202 ist dazu eingerichtet, Notfallnachrichten von mobilen Endgeräten 100 über ein Kommunikationsnetzwerk zu empfangen. Das Kommunikationsnetzwerk kann hierbei ein beliebiges drahtloses Netzwerk oder auch ein kabelgebundenes Netzwerk wie oben mit Bezug zum mobilen Endgerät 100 beschrieben sein.

Das Datenaggregationsmodul 201 sammelt die mit dem Kommunikationsmodul 202 vom mobilen Endgerät 100 empfangenen Notfallnachrichten mit Notfallstandortinformationen und leitet die Notfallnachrichten bzw. die Notfallstandortinformationen automatisch an ein Einsatzendgerät 300 weiter. Darüber hinaus sammelt das Datenaggregationsmodul 201 Kartendaten 60 basierend auf den Notfallstandortinformationen und stellt die Kartendaten 60 dem mobilen Einsatzendgerät 300 zur Verfügung.

Das Speichermodul 207 speichert die Notfallinformationen aus den empfangenen Notfallnachrichten für die weitere Analyse.

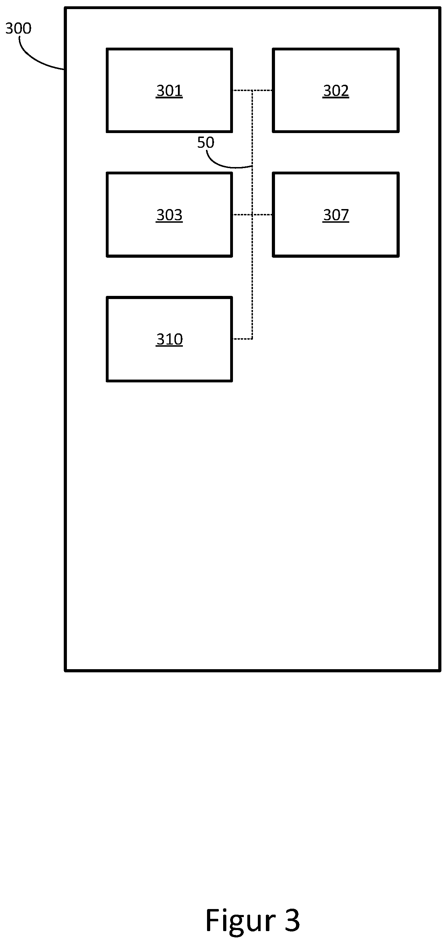

Der grundsätzliche schematische Aufbau des Einsatzendgerät 300 gemäß der 1. Ausführungsform ist in Figur 3 gezeigt. Das mobile Einsatzendgerät 300 umfasst ein Kommunikationsmodul 302, ein Standortmodul 303, ein Speichermodul 307 und ein Displaymodul 310.

Die Module des mobilen Einsatzendgerät 300 sind wie die gleichnamigen Module des mobilen Endgeräts 100 ausgebildet.

Das Kommunikationsmodul 302 ist dazu eingerichtet, die automatisch vom Notfallempfänger 200 weitergeleiteten Notfallnachrichten über ein Kommunikationsnetzwerk zu empfangen. Das Kommunikationsnetzwerk kann hierbei ein beliebiges drahtloses Netzwerk oder auch ein kabelgebundenes Netzwerk, wie oben mit Bezug zum mobilen Endgerät 100 beschrieben, sein.

Darüber hinaus empfängt das Kommunikationsmodul 302 die vom Notfallempfänger 200 gesendeten Kartendaten 60 und gibt diese auf dem Displaymodul 310 aus.

Das Speichermodul 307 speichert die Notfallinformationen aus den empfangenen Notfallnachrichten sowie die vom Notfallempfänger 200 empfangenen Kartendaten 60.

Das Displaymodul 310 ist dazu eingerichtet, die empfangenen Kartendaten 60 sowie die darin enthaltenen Notfallstandortinformationen geeignet darzustellen.

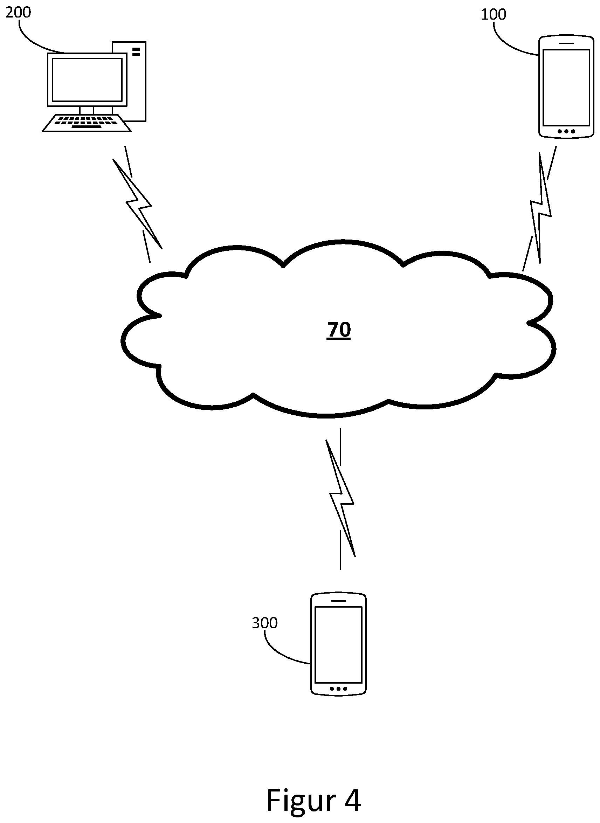

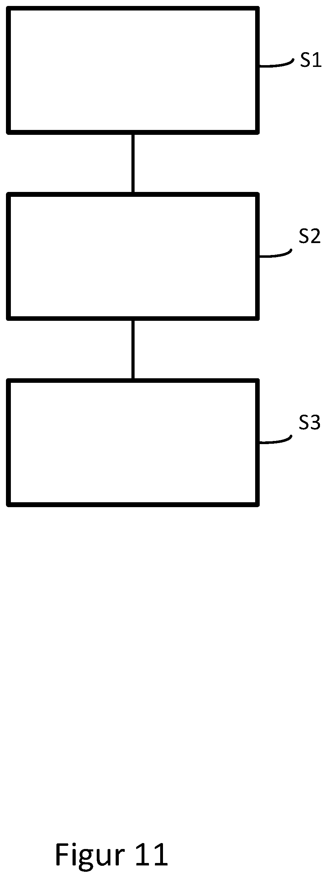

Nachfolgend wird ein Verfahren zum Übermitteln von Notfallnachrichten von einem mobilen Endgerät an einen Notfallempfänger mit Bezug zu den Figuren 4 und 11 beschrieben.

Das Verfahren beginnt mit dem Schritt S1.

Gemäß Schritt S1 aktiviert ein Benutzer eines mobilen Endgeräts 100 einen Notfallmodus auf dem mobilen Endgerät 100. Das Aktivieren des Notfallmodus kann beispielsweise über eine Notfallanwendung auf dem mobilen Endgerät 100 erfolgen. Vorzugsweise wird der Notfallmodus automatisch mit dem Starten der Notfallanwendung gestartet. Gemäß der Ausführungsform kann nach dem Starten der Notfallanwendung ein Aktivieren des Notfallmodus durch Eingeben eines vorher durch einen Benutzer festgelegten Sicherheitscodes gestoppt werden.

Ist der Notfallmodus des mobilen Endgeräts 100 aktiviert, dann sammelt das Notfallmodul 101 automatisch Informationen für Notfallnachrichten von dem Standortmodul 103 und dem Speichermodul 107.

Das Notfallmodul 101 fragt beim Standortmodul 103 in vorbestimmten zeitlichen Abständen einen aktuellen Standort des mobilen Endgeräts 100 ab und bestimmt daraus Standortinformationen für die Notfallnachricht.

Vom Speichermodul 107 fragt das Notfallmodul 101 einen Namen der vom Notfall betroffenen Personen, d. h. des Benutzers des mobilen Endgeräts 100, ab. Der Name der vom Notfall betroffenen Person kann beispielsweise beim Einrichten der Notfallanwendung durch den Benutzer im Speichermodul 107 gespeichert werden.

Zum Bestimmen des Standortes des mobilen Endgeräts 100 kann das Standortmodul 103 beispielsweise ein globales Navigationssatellitensystem verwenden.

Gemäß einer Alternative kann das Standortmodul 103 auch weitere Module des mobilen Endgeräts 100 beispielsweise das Höhenmessermodul 104, das Kompassmodul 105 und/oder das Beschleunigungssensormodul 109 zum Bestimmen des Standortes verwenden.

Das Bestimmen des Standorts oder einer Standortveränderung wird vom Notfallmodul 101 gesteuert. Das Notfallmodul startet beispielsweise die Standortbestimmung mit dem Standortmodul 103. Das Standortmodul 103 empfängt von verschiedenen Navigationssatelliten Signale und berechnet anhand der von den verschiedenen Navigationssatelliten empfangenen Signale einen Standort des mobilen Endgeräts 100.

Gemäß einer Alternative kann das Standortmodul 103 den Standort des mobilen Endgeräts 100 auch anhand der vom Kommunikationsnetzwerk empfangenen Signale bestimmen. In typische Kommunikationsnetzwerk wie beispielsweise 3G, 4G oder 5G-Netzwerke senden die Mobilfunkmasten mit ihren Netzwerknachrichten jeweils deren Standorte mit. Empfängt das mobile Endgerät 100 mittels des Kommunikationsmoduls 102 von mehreren Mobilfunkstationen Signale, so kann es anhand der Signalstärke der von den Mobilfunkstationen empfangenen Signale sowie den empfangenen Standorten der Mobilfunkstationen einen Standort des mobilen Endgeräts 100 per Triangulation bestimmen.

Gemäß einer weiteren Alternative kann das Standortmodul 103 zunächst einen Standort mittels des globalen Navigationssatellitensystems bestimmen, wird im Verlauf eine Signalstärke der Signale, die das mobile Endgerät 100 von den Navigationssatelliten empfängt, schlechter, so kann das Standortmodul 103 den Standort des mobilen Endgeräts 100 auch mithilfe des Höhenmessermoduls 104, des Kompassmoduls 105 und des Beschleunigungssensormoduls 109 bestimmen.

Beispielsweise bestimmt das Standortmodul 103 mithilfe des Höhenmessermoduls 104 eine Höhe bzw. eine sich verändernde Höhe des mobilen Endgeräts 100, mithilfe des Kompassmoduls 105 eine Richtung in die sich das mobile Endgerät 100 bewegt und mithilfe des Beschleunigungssensormoduls 109 eine Anzahl an Schritten die ein Benutzer, der das mobile Endgerät 100 bei sich trägt, zurückgelegt. Aus der bestimmten Richtung und der bestimmten Anzahl von Schritten kann dann ein ungefährer Standort bestimmt werden.

Hat das Notfallmodul 101 die nötigen Informationen für die Notfallnachricht erhalten, sendet das Notfallmodul 101 zunächst eine erste Notfallnachricht an den Notfallempfänger 200, die erste Notfallnachricht umfasst die ermittelten Standortinformationen und beispielsweise den Identifizierungsinformationen. Die Identifizierungsinformationen können beispielsweise der Name des Nutzers des mobilen Endgeräts 100 sein, es kann aber auch lediglich die Telefonnummer des mobilen Endgeräts 100 sein, anhand der das mobile Endgerät 100 eindeutig identifiziert werden kann. Anstelle der Telefonnummer kann auch alternativ die IMSI oder die IMEI Nummer verwendet werden.

Vorzugsweise wird die Notfallnachricht als SMS versendet. Beim Versenden von SMS erhält ein Empfänger automatisch die Telefonnummer des Sendenden, hier das mobile Endgerät 100. Somit umfasst die Notfallnachricht automatisch Informationen mit denen ein Absender bzw. das mobile Endgerät 100 identifiziert werden kann.

Nach dem Senden der ersten Notfallnachricht fragt das Notfallmodul 101 in regelmäßigen Abständen einen aktualisierten Standort beim Standortmodul 103 ab und übermittelt aktualisierte Notfallstandortinformationen an den Notfallempfänger 200 wenn der Abstand zwischen den zuletzt an den Notfallempfänger 200 übermittelten Notfallstandortinformationen und den aktualisierten Notfallstandortinformationen größer oder gleich einem vorbestimmten Mindestabstand ist. Der vorbestimmte Mindestabstand wird dabei regelmäßig durch das Notfallmodul 101 reduziert.

Das Reduzieren des vorbestimmten Mindestabstands erfolgt beispielsweise jeweils nach einem vorbestimmten Zeitintervall.

Gemäß einer Alternative wird der Mindestabstand in Abhängigkeit eines Abstandes zwischen dem mobilen Endgerät 100 und dem mobilen Einsatzendgerät 300 reduziert.

Gemäß einer weiteren Alternative wird der Mindestabstand asymptotisch reduziert, wobei sich der vorbestimmte Mindestabstand einem minimalen Mindestabstand asymptotisch annähert.

Gemäß einer weiteren Alternative ist der Mindestabstand immer größer oder gleich einem minimalen Mindestabstand. Insbesondere wird der minimale Mindestabstand basierend auf einer Geschwindigkeit des mobilen Endgeräts bestimmt. Ist beispielsweise ein Standort des mobilen Endgeräts stationär, d. h. das mobile Endgerät ändert seinen Standort praktisch nicht, so ist der minimale Mindestabstand ebenfalls klein. Bewegt sich das mobile Endgerät beispielsweise mit einer typischen Schrittgeschwindigkeit, so wird der minimale Mindestabstand beispielsweise so gewählt, dass basierend auf der Schrittgeschwindigkeit alle 10, 20, 30 Sekunden oder auch jede Minute oder jede zweite Minute aktualisierte Standortinformationen übermittelt werden.

Beispielsweise kann der vorbestimmte Mindestabstand zunächst in etwa 200 m sein. Bei einer Standortangabe mit einer Genauigkeit von etwa 200 m kann ein alarmierter Notfallhelfer, der anhand des mobilen Einsatzendgeräts 300 den Standort des mobilen Endgeräts 100 mitgeteilt bekommt, zunächst in Richtung des mobilen Endgeräts 100 aufbrechen, wobei hier eine Genauigkeit mit der das mobile Einsatzendgerät 300 den Standort des mobilen Endgeräts 100 erkennt völlig ausreicht, um erst einmal in die richtige Richtung aufzubrechen.

Typischerweise erreichen Notfallhelfer einen Notfallstandort beispielsweise nach 3-5 Minuten. D. h. nach 3-5 Minuten sollte dem mobilen Einsatzendgerät 30 ein genauer Standort des mobilen Endgeräts 100 vorliegen. Ein genauer Standort bedeutet hier beispielsweise eine Genauigkeit von 2-10 m. D. h. ein minimaler Mindestabstand wäre beispielsweise 2, 5, 8 oder 10 m. Wenn ein Notfallhelfer im Mittel beispielsweise 3-5 Minuten zum Notfallstandort benötigt, so sollte beispielsweise alle 30 Sekunden der vorbestimmte Mindestabstand reduziert werden. Hier kann der Mindestabstand beispielsweise zunächst um 50 m, dann um 40 m, dann um 30 m, dann um 20 m, dann um 10 m, dann wieder um 10 m kommen, dann beispielsweise um weitere 10 m, später dann um nur noch 5 m, 4 m usw., bis der minimale Mindestabstand erreicht wird.

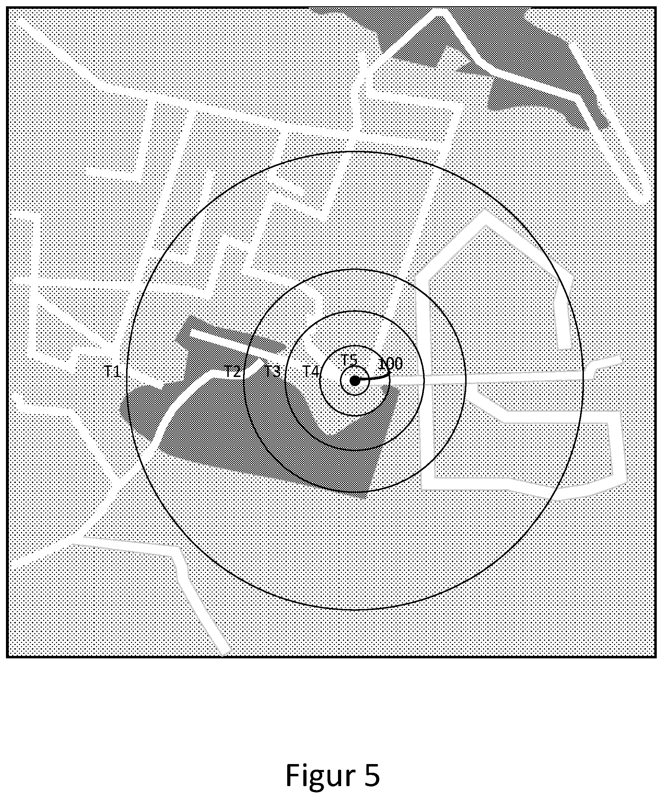

In Figur 5 ist beispielsweise der Verlauf des vorbestimmten Mindestabstand für einen Notfall dargestellt. Die Kreise sind jeweils mit T1, T2, T3, T4 und T5 markiert, wobei der Radius der Kreise gerade dem vorbestimmten Mindestabstand zu verschiedenen Zeitpunkten T1, T2, T3, T4 und T5 entspricht. Der schwarze Punkt im Zentrum der Kreise ist der Standort des mobilen Endgeräts 100 zu den jeweiligen Zeitpunkten. Das mobile Endgerät 100 verändert in diesem Beispiel seinen Standort im Verlauf der Zeit nicht, weshalb nach dem Übersenden der ersten Notfallstandortinformationen keine weiteren aktualisierten Notfallstandortinformationen an den Notfallempfänger versendet werden. Ein Notfallhelfer kann direkt zum gemäß der ersten Notfallstandortinformationen ermittelten Standort des mobilen Endgeräts 100 geleitet werden.

Gemäß einem alternativen Beispiel kann sich das mobile Endgerät 100 auch bewegen. Bewegt sich das mobile Endgerät 100 weiter von einem gemäß der zuletzt übersendete Notfallstandortinformationen Standort weg als den vorbestimmten Mindestabstand zu dem jeweiligen Zeitpunkt, so übermittelt das mobile Endgerät 100 aktualisierte Notfallstandortinformation.

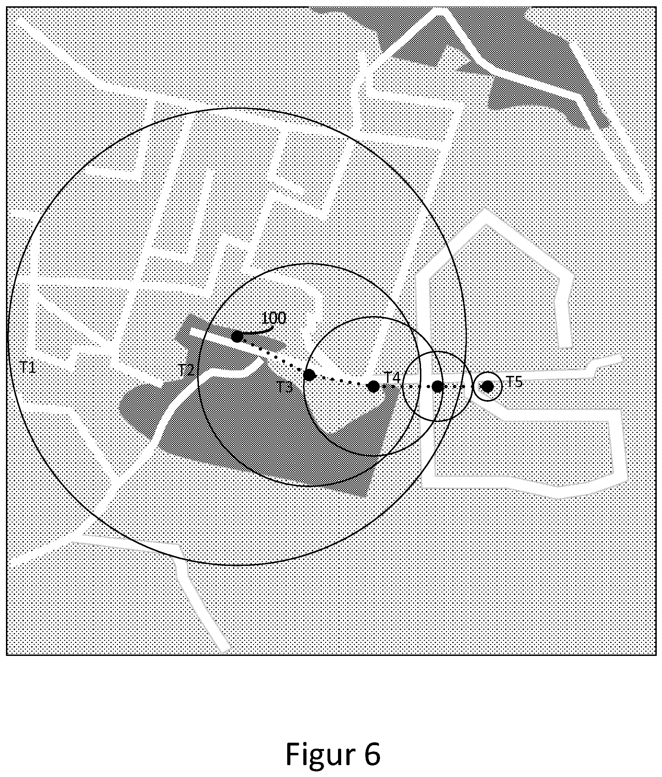

Figur 6 zeigt ein Beispiel, in dem sich das mobile Endgerät 100 bewegt. Ein Weg den das mobile Endgerät 100 zurückgelegt ist mit der gepunkteten Linie markiert. Wie oben mit Bezug zur Figur 5 beschrieben sind für 5 verschiedene Zeitpunkte T1, T2, T3, T4 und T5 der jeweilige Mindestabstand mit Bezug zum jeweiligen Standort des mobilen Endgeräts 100 eingezeichnet. Bei der Übermittlung der ersten Notfallstandortinformationen befindet sich das mobile Endgerät 100 im Mittelpunkt des mit T1 markierten Kreises. Zum Zeitpunkt T2 befindet sich das mobile Endgerät 100 im Mittelpunkt des mit T2 markierten Kreises. Der Radius des Kreises entspricht gerade dem vorbestimmten Mindestabstand zum Zeitpunkt T2. Der zum Zeitpunkt T1 übermittelte Notfallstandort ist noch innerhalb des mit T2 markierten Kreises, somit ist ein Abstand des Standortes des mobilen Endgeräts zum Zeitpunkt T2 von dem Standort zum Zeitpunkt T1 immer noch kleiner als der vorbestimmte Mindestabstand zum Zeitpunkt T2, weshalb der Standort zum Zeitpunkt D1 auch noch innerhalb des Kreises um den Standort zum Zeitpunkt D2 gelegen ist. Daher muss das mobile Endgerät 100 zum Zeitpunkt T2 keine aktualisierten Notfallstandortinformationen mit einer Notfallnachricht an den Notfallempfänger 200 versenden.

Zu den weiteren Zeitpunkten T3, T4 und T5 hat sich das mobile Endgerät 100 jeweils so weit von dem vorherigen Standort wegbewegt, dass der Abstand größer/gleich als der zu dem jeweiligen Zeitpunkt geltende vorbestimmte Mindestabstand ist, weshalb zu den Zeitpunkten T3, T4 und T5 jeweils aktualisierte Notfallstandortinformationen durch das mobile Endgerät 100 an den Notfallempfänger 200 versendet werden.

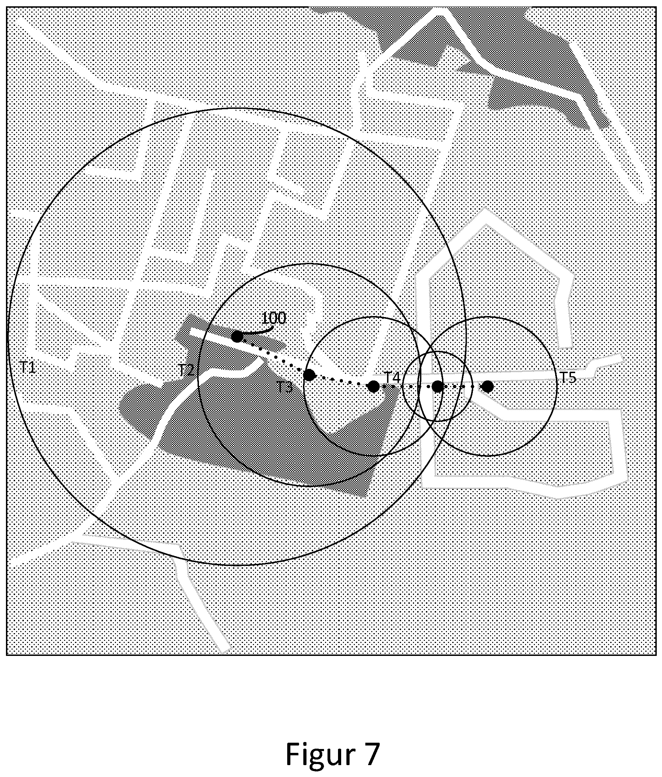

Figur 7 zeigt ein Beispiel, in dem sich das mobile Endgerät 100 genauso bewegt wie in Figur 6. Im Unterschied zu dem Beispiel in Figur 6 wird bei Zeitpunkt T5 aber der vorbestimmte Mindestabstand nicht weiter verkleinert, sondern wieder vergrößert, sodass er denselben Wert wie zum Zeitpunkt T3 hat. Zwischen den Zeitpunkten T4 und T5 hat sich das mobile Endgerät 100 so weit bewegt, dass das mobile Endgerät 100 einen aktualisierten Standort an den Notfallempfänger 200 sendete, demnach bewegt sich das mobile Endgerät 100 mit einer so hohen Geschwindigkeit, bzw. ist der vorbestimmte Mindestabstand mittlerweile so klein, dass sich die Abstände zwischen dem Versenden zweier aktualisierter Notfallstandortinformationen so sehr verkürzen würde, dass ein Kommunikationskanal möglicherweise verstopft wird. Daher wird der vorbestimmte Mindestabstand zum Zeitpunkt T5 gegenüber dem Zeitpunkt T4 wieder vergrößert.

Beispielsweise kann das Vergrößern bzw. Verkleinern des vorbestimmten Mindestabstands beispielsweise schrittweise erfolgen, d. h. es gibt vorbestimmte Schrittweiten anhand derer jeweils ein kleinerer oder größerer vorbestimmter Mindestabstand gewählt wird, alternativ kann der vorbestimmte Mindestabstand aber auch basierend auf der Geschwindigkeit des mobilen Endgeräts 100 bestimmt werden, sodass beispielsweise nur alle 10 Sekunden, alle 20 Sekunden, alle 30 Sekunden, jede Minute, oder jede 2. Minute die aktualisierten Notfallstandortinformationen an den Notfallempfänger versendet werden.

Gemäß einer weiteren Alternative kann beim Vergrößern des vorbestimmten Mindestabstands der vorbestimmte Mindestabstand auch jeweils wieder auf den zum Zeitpunkt T1 geltenden vorbestimmten Mindestabstand, also dem ursprünglichen vorbestimmten Mindestabstand, vergrößert werden.

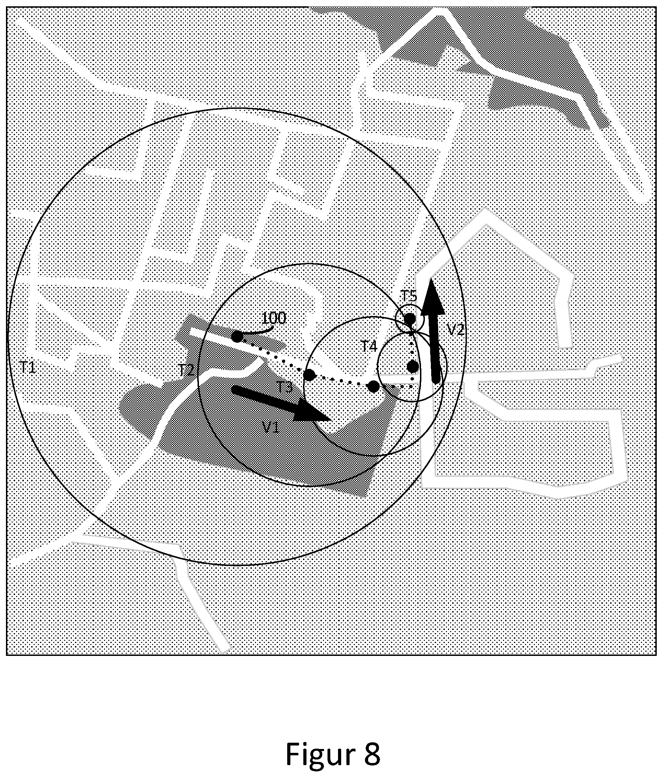

Figur 8 zeigt ein Beispiel, in dem das mobile Endgerät 100 seine wesentliche Bewegungsrichtung von einer ersten Richtung V1 auf eine zweite Richtung V2 ändert. Die Änderung der wesentlichen Bewegungsrichtung ist größer als 45°, sobald das mobile Endgerät 100 diese Änderung der wesentlichen Bewegungsrichtung feststellt, sendet das mobile Endgerät 100 eine Nachricht umfassend aktualisierte Notfallstandortinformationen und die geänderte wesentliche Bewegungsrichtung, hier die Richtung V2, an den Notfallempfänger 200 weiter.

Gemäß einer Alternative können die Notfallnachrichten neben den Notfallstandortinformationen weitere Notfallinformationen umfassen. Beispielsweise umfassen die Notfallinformationen Identifikationsinformationen, die das mobile Endgerät eindeutig identifizieren, eine Anzahl an vom Notfall betroffenen Personen, Namen der vom Notfall betroffenen Personen sowie eine Art des Notfalls. Außerdem können die Notfallinformationen noch Gesundheitsinformation der betroffenen Personen umfassen.

Gemäß einer Alternative können die Notfallnachrichten zusätzlich Aufnahmen, beispielsweise Tonaufnahmen und/oder auch Videoaufnahmen umfassen. Beim Starten des Notfallmodus kann das Notfallmodul 101 automatisch ein Mikrofon und/oder eine Kamera des mobilen Endgeräts 100 starten. Beispielsweise kann das Notfallmodul die Kamera starten und die von der Kamera gelieferten Bilder analysieren. Sind die Bilder der Kamera lediglich schwarz, so löscht das Notfallmodul 101 die Bilddaten wieder, es kann in einem solchen Fall davon ausgegangen werden, dass das mobile Endgerät 100 beispielsweise in einer Hosentasche oder einer anderen Tasche getragen wird. Das Notfallmodul 101 fragt in regelmäßigen Abständen neue Bilder von der Kamera ab, sobald die Bilder nicht mehr vollständig schwarz sind, können die Bilder zur weiteren Analyse an den Notfallempfänger 200 weitergeleitet werden. Die Bilder umfassen beispielsweise auch Videoaufnahmen.

Ebenso wie das Starten einer Kamera, kann das Notfallmodul auch das Mikrofon des mobilen Endgeräts 100 starten und die Tonaufnahmen auf verwertbare Informationen analysieren. Ist lediglich ein Rauschen zu erkennen, so werden die Tonaufnahmen sofort wieder gelöscht. Sind bestimmte Geräusche oder Sprache, beispielsweise Hilferufe, Schreie, Bedrohungen o. ä. mit der Tonaufnahme aufgenommen, so sollten sich die Tonaufnahmen deutlich von einem Rauschen unterscheiden, was das Notfallmodul 101 erkennt und die Tonaufnahmen zur weiteren Analyse an den Notfallempfänger 200 weiterleitet.

Beispielsweise kann, sofern auf dem mobilen Endgerät 100 ausreichend Batteriekapazität und/oder Rechenkapazität vorhanden ist, eine oberflächliche wenig rechenintensive Analyse der Aufnahmen, d. h. der Tonaufnahmen ebenso wie der Bildaufnahmen bzw. der Videoaufnahmen, erfolgen und nur wenn bestimmte Muster in den Aufnahmen zu erkennen sind, die Aufnahmen an den Notfallempfänger 200 weitergeleitet werden.

Beispielsweise erfolgt auf dem mobilen Endgerät eine schnelle Fouriertransformation in den Frequenzraum, die transformierten Signale werden dann zur weiteren Analyse an den Notfallempfänger weitergeleitet.

Beispielsweise kann in einer der Notfallnachrichten auch ein Bewegungsprofil, das im Speichermodul 107 vorgehalten wird, an den Notfallempfänger weitergeleitet werden. Beispielsweise umfasst das Bewegungsprofil eine Mehrzahl von Bewegungsinformationspaaren umfassend Endgerätestandortinformationen des mobilen Endgeräts und korrespondierende Zeitinformationen, anhand des Bewegungsprofils kann beispielsweise der Notfallempfänger 200 wiederholt aufgesuchte Standorte erkennen und beispielsweise erkennen, ob das mobile Endgerät 100 gemäß der wiederholt aufgesuchten Standorte gerade beispielsweise in einer Wohnung, an einem Arbeitsplatz, beim Sport oder bei sonstigen Veranstaltungen, die regelmäßig stattfinden, sein sollte. Das Bewegungsprofil kann beispielsweise auch mit Kalendereinträgen auf dem mobilen Endgerät 100 synchronisiert sein.

Damit im Bewegungsprofil nicht zu viele Daten hinterlegt werden, kann das Bewegungsprofil beispielsweise für weiter zurückliegende Zeiträume die Standorte in längeren Intervallen speichern, während für kürzer zurückliegende Zeiträume die Standorte in kürzeren Intervallen gespeichert werden.

Das Verfahren wird mit Schritt S2 fortgesetzt.

Gemäß Schritt S2 empfängt ein Notfallempfänger 200 Notfallnachrichten umfassend Notfallstandortinformationen des mobilen Endgeräts 100 vom mobilen Endgerät 100. Der Notfallempfänger 200 leitet die empfangenen Notfallstandortinformationen automatisch an das mobile Einsatzendgerät 300 weiter.

Darüber hinaus kann der Notfallempfänger 200 dazu eingerichtet sein, regelmäßig Standortinformationen vom mobilen Einsatzendgerät 300 zu empfangen. Beispielsweise kann der Notfallempfänger 200 auch Standortinformationen von mehreren mobilen Einsatzendgeräten 300 empfangen.

Der Notfallempfänger 200 kann darüber hinaus dazu eingerichtet sein, anhand der empfangenen Notfallstandortinformationen des mobilen Endgeräts 100 und gegebenenfalls auch anhand der Standortinformationen vom mobilen Einsatzendgerät 300 Kartendaten 60 zu ermitteln und die ermittelten Kartendaten 60 dem mobilen Einsatzendgerät 300 bereitzustellen. Die Kartendaten 60 umfassen beispielsweise Routeninformationen für das mobile Einsatzendgerät 300, sodass ein Benutzer des mobilen Einsatzendgeräts 300 anhand der Routeninformationen in den Kartendaten 60 auf schnellstem Weg zum mobilen Endgerät 100 gelangen kann.

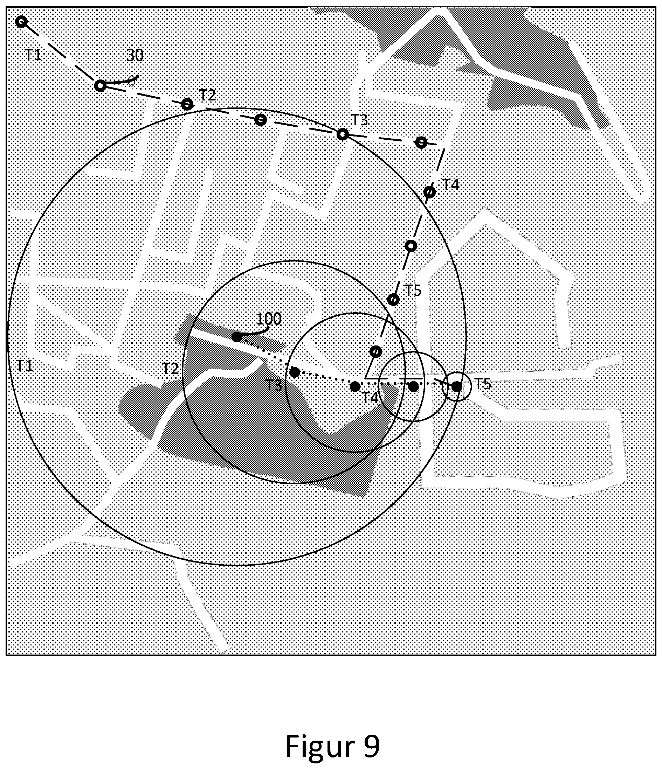

Die Kartendaten 60, die das mobile Einsatzendgerät 300 vom Notfallempfänger 200 erhält, sind schematisch in Figur 9 dargestellt. Wie bereits in Figur 6 dargestellt sieht man für verschiedene Zeitpunkte T1, T2, T3, T4 und T5 einen Kreis um den Standort des mobilen Endgeräts 100, wobei der Radius des Kreises gerade dem zu dem jeweiligen Zeitpunkt korrespondierenden vorbestimmten Mindestabstand entspricht. Außerdem ist der Weg, den das mobile Endgerät 100 zurücklegt mit der gepunkteten Linie angedeutet. Zusätzlich ist in den Kartendaten 60 noch der Ort des mobilen Einsatzendgeräts 300 zu den verschiedenen Zeitpunkten T1, T2, T3, T4 und T5 dargestellt, ebenso wie eine Route, die das mobile Einsatzendgerät 300 zurückgelegt hat bzw. zurücklegen muss, angedeutet mit der gestrichelten Linie.

In diesem Beispiel sieht man deutlich, dass zum Zeitpunkt T5 das mobile Endgerät 100 sich entschieden vom Notfallstandort zum Zeitpunkt T1 entfernt hat und das mobile Einsatzendgerät 300 daher kurz vor Erreichen des mobilen Endgeräts 100, bei einer letzten Kreuzung links abbiegen muss, um den Standort des mobilen Endgeräts zum Zeitpunkt T5 zu erreichen. Außerdem sieht man, dass der Standort bei T5 noch innerhalb des vorbestimmten Mindestabstand zum Zeitpunkt T1 ist, d. h. würde der vorbestimmte Mindestabstand nicht über die Zeit kleiner werden, so hätte das mobile Endgerät 100 zum Zeitpunkt T5 noch keine aktualisierten Notfallstandortinformationen an den Notfallempfänger 200 versendet, und der mit dem mobilen Einsatzendgerät 300 ausgestattete Notfallhelfer würde an der letzten Kreuzung rechts abbiegen, um zum ursprünglichen Standort, also zum Notfallstandort des mobilen Endgeräts 100 zum Zeitpunkt T1, zu gelangen. Dadurch, dass der vorbestimmte Mindestabstand mit der Zeit kleiner wird, kann eine Anzahl an zu versendenden Notfallnachrichten verringert werden, was gerade in einem Notfall ein Kommunikationsnetzwerk erheblich entlasten kann, ohne dass ein gegebenenfalls benachrichtigter Notfallhelfer einen aktuellen Standort eines mobilen Endgeräts 100 eines Hilfesuchenden nicht rechtzeitig erhält. D. h. das vorliegende Verfahren kann zuverlässig Standortinformationen eines Notfalls bereitstellen ohne ein Kommunikationsnetzwerk dabei zu überlassen.

Sind beispielsweise mehrere mobile Endgeräte 100 in einen Notfall verwickelt, und senden alle diese mobilen Endgeräte 100 Notfallnachrichten an einen Notfallempfänger 200, so kann der Notfallempfänger 200 die empfangenen Notfallnachrichten in einem einzigen Notfallereignis zusammenfassen. Werden die Notfallnachrichten beispielsweise innerhalb eines vorbestimmten Zeitfensters empfangen und ist ein Abstand der Standorte der mobilen Endgeräte 100 kleiner als ein vorbestimmter Notfallradius, so fasst der Notfallempfänger 200 die Notfallnachrichten zu einem einzigen Notfallereignis zusammen. Für einen solchen Fall würde der Notfallempfänger 200 Kartendaten 60 mit Notfallstandortinformationen von mehreren mobilen Endgeräten 100 an das mobile Einsatzendgerät 300 versenden.

Empfängt der Notfallempfänger 200 beispielsweise von sehr vielen mobilen Endgeräten 100, beispielsweise 10, 20 oder 30, Notfallnachrichten innerhalb des vorbestimmten Zeitfensters, wobei die Standorte alle innerhalb des vorbestimmten Notfallradius sind, so kann der Notfallempfänger 200 sofort feststellen, dass es sich um einen Notfall mit vielen Beteiligten handelt, für einen solchen Notfall würde der Notfallempfänger 20 dann entsprechend die Notfallinformationen an mehrere beispielsweise 2, 5 oder 10 mobile Einsatzendgeräte 300 versenden.

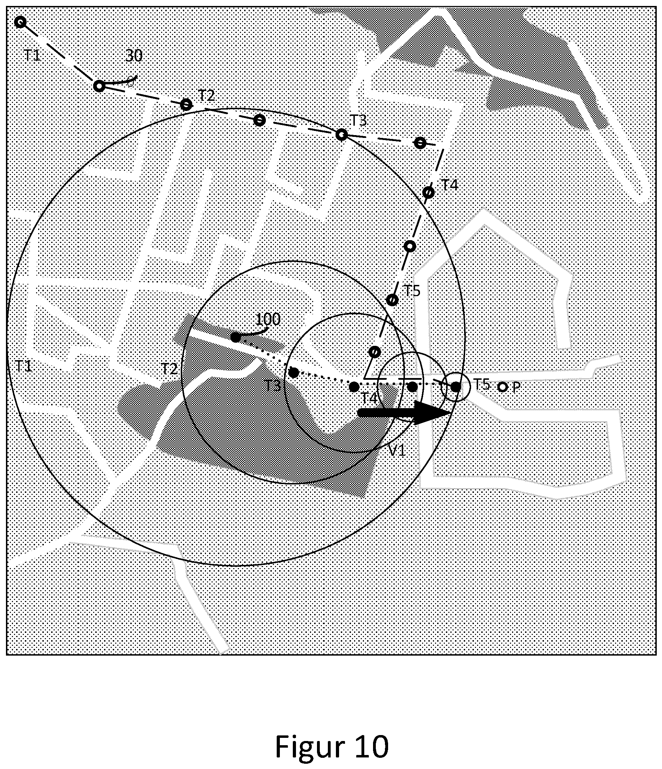

Gemäß einem weiteren Beispiel empfängt der Notfallempfänger zusätzlich zu den aktualisierten Notfallstandortinformationen noch die wesentliche Bewegungsrichtung V1 des mobilen Endgeräts. Basierend auf der wesentlichen Bewegungsrichtung V1 bestimmt der Notfallempfänger 200 den wahrscheinlichen Standort P des mobilen Endgeräts 100, in Figur 10 angedeutet durch den mit P bezeichneten schwarzen Punkt mit weißem Kern, und stellt den wahrscheinlichen Standort P dem mobilen Einsatzendgerät 300 in den Kartendaten 60 bereit.

Gemäß einer weiteren Alternative kann der Notfallempfänger 200 weitere Standortinformationen von einem Standortinformationsanbieter abfragen. Im Internet gibt es diverse Standortinformationsanbieter. Diese bieten beispielsweise Kartendaten 60 an, diese werden beispielsweise mit Verkehrsinformationen auf Straßen versehen, belebte Standorte werden angezeigt, beispielsweise für bestimmte Orte wie Geschäfte, Museen, Theater, Schwimmbäder, Freizeitparks, Tierparks o. ä., werden von diesen Standortinformationsanbieter an Belebtheitsinformationen bereitgestellt. Basierend auf den Informationen über die Belebtheit kann der Notfallempfänger 200 beispielsweise weitere mobile Einsatzendgerät hinzu rufen. Ist beispielsweise der Ort des Notfalls mit einer großen Sicherheit sehr belebt und empfängt der Notfallempfänger 20 von mehreren mobilen Endgeräten 100 Notfallnachrichten von dem sehr belebten Notfallort, dann ist davon auszugehen, dass viele weitere Menschen von dem Notfall betroffen sind. Der Notfallempfänger 200 kann für einen solchen Fall direkt weitere Einsatzkräfte benachrichtigen.

Gemäß einer Ausgestaltung empfängt der Notfallempfänger 200 von dem mobilen Endgerät 100 Aufnahmen. Die Aufnahmen können beispielsweise Tonaufnahmen, Bildaufnahmen oder Videoaufnahmen sein. Da der Notfallempfänger 200 im Normalfall eine stationäre Einrichtung ist, beispielsweise eine Notfallzentrale, eine Einsatzzentrale o. ä., sollte der Notfallempfänger 200 in der Lage sein die empfangenen Aufnahmen eingehend zu analysieren. Beispielsweise können Tonaufnahmen mittels einer linguistischen Datenverarbeitung verarbeitet werden, um den vorliegenden Notfall genauer zu bestimmen.

Der Standortinformationsanbieter kann neben einem entsprechenden öffentlichen oder privaten Dienstanbieter auch eine Datenbank des Notfallempfängers 200 sein.

Gemäß einer weiteren Ausgestaltung kann der Notfallempfänger 200 vom Standortinformationsanbieter auch Informationen über frühere Notfälle beziehen und beispielsweise Informationen über Veranstaltungen am Notfallstandort.

Alternativ können die Aufnahmen auch Bild oder Videoaufnahmen sein, auch diese können beispielsweise mit einer Bilderkennung analysiert werden, um den vorliegenden Notfall genauer zu bestimmen, d. h. zusätzliche Notfallinformationen zu bestimmen.

Ist beispielsweise der Nutzer des mobilen Endgeräts 100 nicht in der Lage, den bestehenden Notfall genauer über das mobile Endgerät 100 zu spezifizieren, so kann anhand der Aufnahmen die Notfallsituation bzw. der Notfall genauer bestimmt werden. Zu den weiteren Notfallinformationen können beispielsweise Informationen über eine Art des Notfalls bestimmt werden, handelt es sich beispielsweise um einen Terroranschlag, eine Gefahrenlage in der lediglich eine einzelne Person bedroht ist, ein Verkehrsunfall, ein Feuer, ein durch Naturgewalten hervorgerufener Notfall o. ä.. Die Aufnahmen können beispielsweise für die jeweilige Art des Notfalls bestimmte Tonmuster oder Bilder aufweisen, wobei der Notfallempfänger 200 dazu ausgebildet ist gerade diese Muster zu erkennen.

Das Verfahren wird mit Schritt S3 fortgesetzt.

Gemäß dem Schritt S3 empfängt das mobile Einsatzendgerät 300 die Notfallinformationen vom Notfallempfänger 200.

Gemäß der vorliegenden Erfindung kann das mobile Einsatzendgerät 300 mit dem Empfang der Notfallnachrichten vom Notfallempfänger 200 automatisch in einen Notfallmodus schalten. Im Notfallmodus empfängt das mobile Einsatzendgerät 300 zusätzlich zu den Notfallnachrichten Kartendaten 60 vom Notfallempfänger 200 und sendet ähnlich wie das mobile Endgerät 100 Notfallnachrichten mit Standortinformationen des mobilen Einsatzendgeräts an den Notfallempfänger 200. Auch das mobile Einsatzendgerät 300 sendet aktualisierte Standortinformationen nur, wenn sich ein Standort um mindestens den vorbestimmten Mindestabstand von dem vorher gesendeten Standort unterscheidet. Der vorbestimmte Mindestabstand nimmt ebenso wie der vorbestimmte Mindestabstand, den das mobile Endgerät 100 verwendet, mit der Zeit ab. Basierend auf den Kartendaten 60 bestimmt das mobile Einsatzendgerät 30 eine Route zum mobilen Endgerät 100 und stellt diese auf dem Displaymodul 310 dar.

Gemäß einer Ausgestaltung sendet der Notfallempfänger auch Kartendaten 16 an das mobile Endgerät 100, damit ein Nutzer des mobilen Endgeräts 100 über einen Standort eines Nutzers des mobilen Einsatzendgeräts 300 aktuelle Informationen hat und gegebenenfalls diesen aufsuchen kann.

Vorzugsweise schaltet das mobile Endgerät 100 mit Aktivierung des Notfallmodus in einen "stumm" Zustand, in dem keine Signaltöne beim Empfangen von Nachrichten oder ähnlichem mehr wiedergegeben werden.

Gemäß einer weiteren Ausgestaltung kann ein Nutzer des mobilen Einsatzendgeräts 300 sobald er sich in der unmittelbaren Nähe des mobilen Endgeräts 100 befindet auf dem mobilen Endgerät die Wiedergabe eines spezifischen Signals initiieren. Über das spezifische Signal kann das mobile Endgerät 100 vom Nutzer des mobilen Einsatzendgeräts 300 lokalisiert werden. Hierbei bedeutet die unmittelbare Nähe beispielsweise wenige Meter. Die unmittelbare Nähe kann beispielsweise auch anhand von Kommunikationsnetzwerk Informationen bestimmt werden. Beispielsweise kann das mobile Endgerät 100 eine Bluetooth Kennung des mobilen Endgeräts 100 in den Notfallnachrichten mitsenden. Es kennt ein mobiles Einsatzendgerät 300 eine Bluetooth-Umgebung, so kann es beispielsweise das mobile Endgerät 100 finden und wenn es das mobile Endgerät 100 findet, so kann es auf dem mobilen Endgerät 100 das wiedergeben des spezifischen Signals initialisieren.

### Bezugszeichenliste

- 50: Kanal
- 60: Kartendaten
- 70: Kommunikationsnetzwerk
- 100: mobiles Endgerät
- 101: Notfallmodul
- 102: Kommunikationsmodule
- 103: Standortmodul
- 104: Höhenmessermodul
- 105: Kompassmodul
- 106: Kalendermodul
- 107: Speichermodul
- 108: Profilmodul
- 109: Beschleunigungssensormodul
- 110: Displaymodul
- 200: Notfallempfänger
- 201: Datenaggregationsmodul
- 202: Kommunikationsmodul
- 207: Speicher-Modul
- 300: mobiles Einsatzendgerät
- 302: Kommunikationsmodul
- 303: Standortmodul
- 307: Speichermodul
- 310: Displaymodul

## Patentansprüche

1. Verfahren zum Übermitteln von Notfallnachrichten von einem mobilen Endgerät (100) an einen Notfallempfänger (200), wobei das mobile Endgerät (100) einen Sensor (103, 104, 105, 109) zum Bestimmen des Standortes des mobilen Endgeräts (100) und ein Notfallmodul (101) aufweist, das nach dem Aktivieren automatisch Notfallnachrichten an einen Notfallempfänger (200) übermittelt, wobei mindestens eine Notfallnachricht Notfallstandortinformationen des mobilen Endgeräts beinhaltet, umfassend folgende Operationen, die nach dem Aktivieren des Notfallmoduls (101) in regelmäßigen Abständen ausgeführt werden:
- Ermitteln eines aktualisierten Standorts des mobilen Endgeräts (100) durch das mobile Endgerät (100),
- Bestimmen eines Abstands zwischen dem aktualisierten Standort und einem Standort entsprechend zuletzt an den Notfallempfänger (200) übermittelten Notfallstandortinformationen,
- Übermitteln von aktualisierten Notfallstandortinformationen an den Notfallempfänger (200) mittels einer Notfallnachricht, wobei das Übermitteln der aktualisierten Notfallstandortinformation nur dann erfolgt, wenn der Abstand größer oder gleich einem vorbestimmten Mindestabstand ist, **dadurch gekennzeichnet, dass**
der vorbestimmte Mindestabstand regelmäßig reduziert wird wenn das mobile Endgerät binnen des vorbestimmten Mindestabstandsreduzierzeitintervalls keine aktualisierten Notfallstandortinformationen an den Notfallempfänger versendet hat.

2. Verfahren gemäß Anspruch 1, wobei das regelmäßige Reduzieren des vorbestimmten Mindestabstandes insbesondere mindestens eines der folgenden umfasst:
- Reduzieren des Mindestabstands jeweils in Abhängigkeit von einem Abstand eines mobilen Einsatzendgeräts (300) von den zuletzt übermittelten Notfallstandortinformationen, wobei das mobile Einsatzendgerät (300) seinen Standort in regelmäßigen Abständen an das mobile Endgerät (100) sendet,
- Reduzieren des vorbestimmten Mindestabstands jeweils nach kürzer werdenden vorbestimmten Zeitintervallen,
- Reduzieren des vorbestimmten Mindestabstandes, wobei der vorbestimmte Mindestabstand immer größer oder gleich einem minimalen Mindestabstand ist.

3. Verfahren gemäß Anspruch 1 oder 2, außerdem umfassend:
- Erhöhen des vorbestimmten Mindestabstands wenn das mobile Endgerät (100) binnen des vorbestimmten Mindestabstandsreduzierzeitintervalls die aktualisierten Notfallstandortinformationen an den Notfallempfänger (200) versendet hat.

4. Verfahren gemäß einem der vorhergehenden Ansprüche, wobei das Ermitteln eines aktuellen Standorts umfasst:
Bestimmen einer Höhe des mobilen Endgeräts (100), beispielsweise mit einem barometrischen Höhenmesser (104), wobei der barometrische Höhenmesser (104) vorzugsweise mit dem Aktivieren des Notfallmoduls aktiviert wird.

5. Verfahren gemäß einem der vorhergehenden Ansprüche, wobei das Aktivieren des Notfallmoduls (101) umfasst:
- Starten einer Aufnahme, beispielsweise eine Tonaufnahme und/oder eine Videoaufnahme, mit dem mobilen Endgerät (100),
- optionales Senden der Aufnahme an den Notfallempfänger (200).

6. Verfahren gemäß dem vorhergehenden Anspruch 5, weiter umfassend:
- Analysieren der Aufnahme auf vorbestimmte Muster, und wenn die vorbestimmten Muster in der Aufnahme gefunden werden:
- Senden von Informationen über das vorbestimmte Muster mit einer Notfallnachricht an den Notfallempfänger (200), vorzugsweise umfassend Senden der Aufnahme oder von Ausschnitten der Aufnahme mit dem vorbestimmten Muster an den Notfallempfänger (200).

7. Verfahren gemäß einem der vorhergehenden Ansprüche, wobei das Aktivieren des Notfallmoduls (101) umfasst:
- Senden einer Notfallnachricht **,** umfassend ein Bewegungsprofil des mobilen Endgeräts (100), wobei das Bewegungsprofil eine Mehrzahl von Bewegungsinformationspaaren aus Endgerätestandortinformationen des mobilen Endgeräts (100) und korrespondierende Zeitinformationen von einem vorbestimmten Zeitraum vor dem Aktivieren des Notfallmodus umfasst, wobei das Bewegungsprofil vorzugsweise mit Einträgen in einer Kalenderanwendung auf dem mobilen Endgerät (100) abgeglichen wird.

8. Verfahren gemäß dem vorhergehenden Anspruch 7, weiterhin umfassend:
- Vorhalten des Bewegungsprofils mit einer Mehrzahl von Bewegungsinformationspaaren mindestens über den vorbestimmten Zeitraum, wobei eine zeitliche Granularität der im Bewegungsprofil hinterlegten Bewegungsinformationspaare für weiter zurückliegende Zeitpunkte abnimmt.

9. Verfahren gemäß einem der vorhergehenden Ansprüche außerdem umfassend:
- Erfassen einer wesentlichen Bewegungsrichtung, insbesondere einer wesentlichen Bewegungsgeschwindigkeit, des mobilen Endgeräts (100), und
- Senden einer Notfallnachricht umfassend die wesentliche Bewegungsrichtung, insbesondere die wesentliche Bewegungsgeschwindigkeit, an den Notfallempfänger (200), bevorzugt außerdem umfassend
- Senden einer weiteren Notfallnachricht umfassend einen aktualisierten Notfallstandort und die wesentliche Bewegungsrichtung, insbesondere die wesentliche Bewegungsgeschwindigkeit, wenn das mobile Endgerät (100) eine Richtungsänderung der wesentlichen Bewegungsrichtung des mobilen Endgeräts (100) von mehr als 45 Grad erfasst.

10. Verfahren gemäß einem der vorhergehenden Ansprüche außerdem umfassend automatisches Aktivieren des Notfallmodus (101), wenn der Beschleunigungssensor (109) eine Beschleunigung oberhalb eines Gefahrengrenzwerts erfasst.

11. Verfahren nach einem der vorhergehenden Ansprüche, wobei die Notfallnachrichten neben einer Standortinformation weitere Notfallinformationen umfassen, wobei die weiteren Notfallinformationen mindestens eines der folgenden umfassen:
- Identifikationsinformationen, die das mobile Endgerät eindeutig identifizieren,
- eine Anzahl der vom Notfall betroffenen Personen,
- Namen der vom Notfall betroffenen Personen,
- eine Art des Notfalls **,** und
- Gesundheitsinformationen der betroffenen Personen.

12. Verfahren nach einem der vorhergehenden Ansprüche außerdem umfassend:
- Sammeln von Netzwerk-Informationen über eine Netzwerkumgebung des mobilen Endgeräts (100), und
- Senden der Netzwerk-Informationen in einer Notfallnachricht, wobei das mobile Endgerät (100) beim Sammeln der Netzwerk-Informationen insbesondere Netzwerk-Informationen über drahtlose Netzwerke sammelt, insbesondere WiFi-Netzwerke, Bluetooth -Netzwerke, WiMAX-Netzwerke und Mobilfunk-Netzwerke (70).

13. Computerprogrammprodukt, umfassend Befehle, die bei der Ausführung des Programms durch ein mobiles Endgerät dieses veranlassen, das Verfahren nach einem der vorhergehenden Ansprüche auszuführen

14. Computerlesbares Speichermedium, umfassend Befehle, die bei der Ausführung durch ein mobiles Endgerät dieses veranlassen, das Verfahren nach einem der Ansprüche 1 bis 12 auszuführen.

15. System zur Datenverarbeitung, umfassend ein mobiles Endgerät und Mittel zur Ausführung des Verfahrens nach einem der Ansprüche 1 bis 12.

## Claims

1. A method for transmitting emergency messages from a mobile terminal (100) to an emergency responder (200), wherein the mobile terminal (100) comprises a sensor (103, 104, 105, 109) for determining the location of the mobile terminal (100) and an emergency module (101) which, upon activation, automatically transmits emergency messages to the emergency responder (200), at least one emergency message comprising emergency location information of the mobile terminal, the method comprising the following operations, which are performed at regular intervals after activation of the emergency module (101):
- determining, by the mobile terminal (100), an updated location of the mobile terminal (100),
- determining a distance between the updated location and a location corresponding to the emergency location information last transmitted to the emergency responder (200),
- transmitting updated emergency location information to the emergency responder (200) by means of an emergency message, wherein the updated emergency location information is transmitted only if the distance is greater than or equal to a predetermined minimum distance, **characterized in that**
the predetermined minimum distance is regularly reduced if the mobile terminal has not transmitted updated emergency location information to the emergency responder within the predetermined minimum-distance reduction time interval.

2. The method according to claim 1, wherein the regular reduction of the predetermined minimum distance comprises, in particular, at least one of the following:
- reducing the minimum distance in each case depending on a distance between a mobile field terminal (300) and the emergency location information last transmitted, wherein the mobile field terminal (300) transmits its location to the mobile terminal (100) at regular intervals,
- reducing the predetermined minimum distance in each case after predetermined time intervals that become progressively shorter,
- reducing the predetermined minimum distance, wherein the predetermined minimum distance is always greater than or equal to the smallest minimum distance.

3. The method according to claim 1 or 2, further comprising:
- increasing the predetermined minimum distance if the mobile terminal (100) has transmitted the updated emergency location information to the emergency responder (200) within the predetermined minimum-distance reduction time interval.

4. The method according to any one of the preceding claims, wherein determining a current location comprises:
determining an altitude of the mobile terminal (100), for example using a barometric altimeter (104), wherein the barometric altimeter (104) is preferably activated upon activation of the emergency module.

5. The method according to any one of the preceding claims, wherein activating the emergency module (101) comprises:
- starting a recording, for example an audio recording and/or a video recording, using the mobile terminal (100),
- optionally transmitting the recording to the emergency responder (200).

6. The method according to claim 5, further comprising:
- analyzing the recording for predetermined patterns, and, if the predetermined patterns are found in the recording:
- transmitting information about the predetermined pattern to the emergency responder (200) together with an emergency message, preferably comprising transmitting the recording or excerpts of the recording containing the predetermined pattern to the emergency responder (200).

7. The method according to any one of the preceding claims, wherein activating the emergency module (101) comprises:
- transmitting an emergency message comprising a movement profile of the mobile terminal (100), wherein the movement profile comprises a plurality of movement information pairs consisting of terminal location information of the mobile terminal (100) and corresponding time information from a predetermined period prior to activation of the emergency mode, wherein the movement profile is preferably compared with entries in a calendar application on the mobile terminal (100).

8. The method according to claim 7, further comprising:
- maintaining the movement profile comprising a plurality of movement information pairs for at least the predetermined period, wherein the temporal granularity of the movement information pairs stored in the movement profile decreases for points in time further in the past.

9. The method according to any one of the preceding claims, further comprising:
- detecting a predominant direction of movement, in particular a predominant speed of movement, of the mobile terminal (100), and
- transmitting an emergency message comprising the predominant direction of movement, in particular the predominant speed of movement, to the emergency responder (200), preferably further comprising
- transmitting a further emergency message comprising an updated emergency location and the predominant direction of movement, in particular the predominant speed of movement, if the mobile terminal (100) detects a directional change of more than 45 degrees in the predominant direction of movement of the mobile terminal (100).

10. The method according to any one of the preceding claims, further comprising automatically activating the emergency mode (101) if the acceleration sensor (109) detects an acceleration above a danger threshold.

11. The method according to any one of the preceding claims, wherein the emergency messages comprise, in addition to location information, further emergency information, wherein the further emergency information comprises at least one of the following:
- identification information uniquely identifying the mobile terminal,
- a number of persons affected by the emergency,
- names of the persons affected by the emergency,
- a type of emergency, and
- health information of the persons affected.

12. The method according to any one of the preceding claims, further comprising:
- collecting network information about a network environment of the mobile terminal (100), and
- transmitting the network information in an emergency message, wherein, when collecting the network information, the mobile terminal (100) collects, in particular, network information about wireless networks, in particular Wi-Fi networks, Bluetooth networks, WiMAX networks and mobile phone networks (70).

13. A computer program product comprising instructions which, when the program is executed by a mobile terminal, cause the mobile terminal to carry out the method according to any one of the preceding claims.

14. A computer-readable storage medium comprising instructions which, when executed by a mobile terminal, cause the mobile terminal to carry out the method according to any one of claims 1 to 12.

15. A data processing system comprising a mobile terminal and means for carrying out the method according to any one of claims 1 to 12.

## Revendications

1. Procédé de transmission de messages d'urgence d'un terminal mobile (100) à un récepteur d'urgence (200), le terminal mobile (100) comprenant un capteur (103, 104, 105, 109) destiné à déterminer la position du terminal mobile (100) et un module d'urgence (101) qui, lors de son activation, transmet automatiquement des messages d'urgence au récepteur d'urgence (200), au moins un message d'urgence comprenant des informations de position d'urgence du terminal mobile, le procédé comprenant les opérations suivantes, qui sont effectuées à intervalles réguliers après l'activation du module d'urgence (101) :
- déterminer, par le terminal mobile (100), une position actualisée du terminal mobile (100),
- déterminer une distance entre la position actualisée et une position correspondant aux dernières informations de position d'urgence transmises au récepteur d'urgence (200),
- transmettre des informations de position d'urgence actualisées au récepteur d'urgence (200) au moyen d'un message d'urgence, les informations de position d'urgence actualisées n'étant transmises que si la distance est supérieure ou égale à une distance minimale prédéterminée, **caractérisé en ce que**
la distance minimale prédéterminée est régulièrement réduite si le terminal mobile n'a pas transmis d'informations de position d'urgence actualisées au récepteur d'urgence pendant l'intervalle de temps prédéterminé pour la réduction de la distance minimale.

2. Le procédé selon la revendication 1, dans lequel la réduction régulière de la distance minimale prédéterminée comprend notamment au moins l'une des opérations suivantes :
- réduire la distance minimale dans chaque cas en fonction d'une distance entre un terminal mobile d'intervention (300) et la position correspondant aux dernières informations de position d'urgence transmises, le terminal mobile d'intervention (300) transmettant sa position au terminal mobile (100) à intervalles réguliers,
- réduire la distance minimale prédéterminée dans chaque cas après des intervalles de temps prédéterminés dont la durée diminue progressivement,
- réduire la distance minimale prédéterminée, la distance minimale prédéterminée étant toujours supérieure ou égale à la plus petite distance minimale.

3. Le procédé selon la revendication 1 ou 2, comprenant en outre l'opération suivante :
- augmenter la distance minimale prédéterminée si le terminal mobile (100) a transmis les informations de position d'urgence actualisées au récepteur d'urgence (200) pendant l'intervalle de temps prédéterminé pour la réduction de la distance minimale.

4. Le procédé selon l'une quelconque des revendications précédentes, dans lequel la détermination d'une position actuelle comprend :
la détermination d'une altitude du terminal mobile (100), par exemple au moyen d'un altimètre barométrique (104), l'altimètre barométrique (104) étant de préférence activé lors de l'activation du module d'urgence.

5. Le procédé selon l'une quelconque des revendications précédentes, dans lequel l'activation du module d'urgence (101) comprend :
- le démarrage d'un enregistrement, par exemple d'un enregistrement audio et/ou vidéo, au moyen du terminal mobile (100),
- éventuellement, la transmission de l'enregistrement au récepteur d'urgence (200).

6. Le procédé selon la revendication 5, comprenant en outre les opérations suivantes :
- analyser l'enregistrement afin d'y rechercher des motifs prédéterminés et, si les motifs prédéterminés sont détectés dans l'enregistrement :
- transmettre des informations relatives au motif prédéterminé au récepteur d'urgence (200) conjointement avec un message d'urgence, de préférence comprenant la transmission de l'enregistrement ou d'extraits de l'enregistrement contenant le motif prédéterminé au dispositif d'urgence (200).

7. Le procédé selon l'une quelconque des revendications précédentes, dans lequel l'activation du module d'urgence (101) comprend :
- transmettre un message d'urgence comprenant un profil de déplacement du terminal mobile (100), le profil de déplacement comprenant une pluralité de paires d'informations de déplacement constituées d'informations de position du terminal mobile (100) et d'informations temporelles correspondantes, relatives à une période prédéterminée précédant l'activation du mode d'urgence, le profil de déplacement étant de préférence comparé à des entrées d'une application de calendrier du terminal mobile (100).

8. Le procédé selon la revendication 7, comprenant en outre :
- conserver le profil de déplacement comprenant une pluralité de paires d'informations de déplacement pendant au moins la période prédéterminée, la granularité temporelle des paires d'informations de déplacement conservées dans le profil de déplacement diminuant pour les instants situés plus loin dans le passé.

9. Le procédé selon l'une quelconque des revendications précédentes, comprenant en outre les opérations suivantes :
- détecter une direction prédominante de déplacement, notamment une vitesse prédominante de déplacement, du terminal mobile (100), et
- transmettre un message d'urgence comprenant la direction prédominante de déplacement, notamment la vitesse prédominante de déplacement, au récepteur d'urgence (200), de préférence comprenant en outre
- transmettre un message d'urgence supplémentaire comprenant une position d'urgence actualisée et la direction prédominante de déplacement, notamment la vitesse prédominante de déplacement, si le terminal mobile (100) détecte un changement de direction de plus de 45 degrés de la direction prédominante de déplacement du terminal mobile (100).

10. Le procédé selon l'une quelconque des revendications précédentes, comprenant en outre l'activation automatique du mode d'urgence (101) si le capteur d'accélération (109) détecte une accélération supérieure à un seuil de danger.

11. Le procédé selon l'une quelconque des revendications précédentes, dans lequel les messages d'urgence comprennent, outre les informations de position, des informations d'urgence supplémentaires, les informations d'urgence supplémentaires comprenant au moins l'un des éléments suivants :
- des informations d'identification identifiant de manière univoque le terminal mobile,
- le nombre de personnes touchées par l'urgence,
- les noms des personnes touchées par l'urgence,
- un type d'urgence, et
- des informations relatives à l'état de santé des personnes touchées.

12. Le procédé selon l'une quelconque des revendications précédentes, comprenant en outre les opérations suivantes :
- collecter des informations de réseau relatives à l'environnement réseau du terminal mobile (100), et
- transmettre les informations de réseau dans un message d'urgence, le terminal mobile (100), lors de la collecte des informations de réseau, collectant notamment des informations de réseau relatives à des réseaux sans fil, en particulier des réseaux Wi-Fi, des réseaux Bluetooth, des réseaux WiMax et des réseaux de téléphonie mobile (70).

13. Produit programme d'ordinateur comprenant des instructions qui, lorsque le programme est exécuté par un terminal mobile, amènent le terminal mobile à mettre en œuvre le procédé selon l'une quelconque des revendications précédentes.

14. Support de stockage lisible par ordinateur comprenant des instructions qui, lorsqu'elles sont exécutées par un terminal mobile, amènent le terminal mobile à mettre en œuvre le procédé selon l'une quelconque des revendications 1 à 12.

15. Système de traitement de données comprenant un terminal mobile et des moyens pour mettre en œuvre le procédé selon l'une quelconque des revendications 1 à 12.
